(19) Europäisches Patentamt / European Patent Office / Office européen des brevets

(11) **EP 3 771 061 B1**

(12) **EUROPEAN PATENT SPECIFICATION**

(45) Date of publication and mention of the grant of the patent:
**23.08.2023  Bulletin 2023/34**

(21) Application number: **20173898.6**

(22) Date of filing: **11.05.2020**

(51) International Patent Classification (IPC):
**H02J 3/00** (2006.01)

(52) Cooperative Patent Classification (CPC):
**H02J 3/001;** H02J 2203/20; Y02E 60/00; Y04S 40/20

(54) **POWER SYSTEM STABILIZATION SYSTEM AND POWER SYSTEM STABILIZATION METHOD USING CALCULATED POWER SYSTEM SENSITIVITY**

STABILISIERUNGSSYSTEM DES STROMSYSTEMS UND STABILISIERUNGSVERFAHREN DES STROMSYSTEMS UNTER VERWENDUNG DER BERECHNETEN NETZEMPFINDLICHKEIT DES STROMSYSTEMS

SYSTÈME DE STABILISATION DE SYSTÈME D'ALIMENTATION ET PROCÉDÉ DE STABILISATION DE SYSTÈME D'ALIMENTATION UTILISANT LA SENSIBILITÉ DU SYSTÈME D'ALIMENTATION CALCULÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2019   JP 2019137862**

(43) Date of publication of application:
**27.01.2021   Bulletin 2021/04**

(73) Proprietor: **Hitachi, Ltd.**
**Tokyo 100-8280 (JP)**

(72) Inventors:
• **KIRIHARA, Kenta**
**Tokyo 100-8280 (JP)**

• **KURODA, Eisuke**
**Tokyo 100-8280 (JP)**
• **YATSU, Masahiro**
**Tokyo 100-8280 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
**WO-A1-2017/182918     JP-A- 2006 101 619**

## Description

Technical Field

The present invention relates to a power system stabilization system and a power system stabilization method.

Background Art

Power systems are becoming more and more complicated due to factors such as recent introduction of renewable energy, despite the fact that their facilities are aging. Thus, the power systems are becoming difficult to stabilize.

For example, Patent Literature 1 discloses an object in this context of "efficiently controlling overload of power transmission and substation facilities due to both short cycle and long cycle load fluctuations while satisfying the operational constraints of the power system, thereby improving controllability and economic efficiency." Disclosed as a solution to this are "the MMI 5 sets an operational limit value 52 for overload prevention, which is 980 of the operational limit value 53 of the power transmission and substation facilities 411 to 41n. The overload prevention countermeasure unit 37 calculates a value of overload prevention countermeasure when the online power flow value of the power transmission and substation facilities 411 to 41n exceeds the operational limit value 52 for overload prevention. The overload prevention countermeasure unit 37 achieves overload resolution of the power transmission and substation facilities 411 to 41n at the time of short cycle load fluctuation, and at the same time, complements the cycle period of the overload resolution processing of the power transmission and substation facilities 411 to 41n by economic load distribution control at the time of long cycle load fluctuation" (see Abstract in Patent Literature 1).

Patent Literature 2 also describes a similar object of "providing a system operation support device and a method in a power system capable of performing operation support for a power system operator in order to stabilize the power system, and an application system thereof." Disclosed as a solution to this is "a system operation support device in a power system stabilizing the power system and characterized be being provided with: a predicted accident time system state calculation unit receiving measurement data, a system topology, and a target accident type as inputs and calculating a system state and a predicted accident time system state; a control menu calculation unit receiving the results of the predicted accident time system state calculation unit as inputs and calculating a control menu; a restoration control means calculation unit receiving the result of the control menu calculation as an input and calculating a restoration control procedure; a restoration prevention control procedure calculation unit receiving the result of the restoration control means calculation unit and a target restoration time parameter as inputs and performing a power generator output adjustment time simulation, a necessary prevention control amount calculation, and a prevention control procedure calculation; and a display unit displaying control procedure calculation; and a display unit displaying the restoration control procedure and the prevention control procedure" (see Abstract in Patent Literature 2). Patent Literature 3 discloses a power system stability diagnosis device configured to operate a characteristic value of each order by using a characteristic value analysis means by applying an autoregressive model with respect to time series measurement data, performs screening to the operated characteristic value by a frequency screening means, and extracts the dominant characteristic value from a plurality of the remaining characteristic values by applying a dominant mode extraction method. Eventually, Patent Literature 4 discloses a method for determining mutual voltage sensitivity coefficients between several measuring nodes in an electric power network without the knowledge of the network parameters.

Non Patent Literature 1 discloses that "power flow Jacobian calculation is carried out by the least squares method using time-synchronized voltage and current phasor data".

Citation List

Patent Literature

Patent Literature 1: JP 2010-063320 A
Patent Literature 2: JP 2019-017194 A
Patent Literature 3: JP 2006-101 619 A
Patent Literature 4: WO 2017/182 918 A1

Non-Patent Literature

Non Patent Literature 1: Yu Christine Chen, Jianhui Wang, Alejandro D. Dominguez-Garcia, Peter W. Sauer, "Measurement-Based Estimation of the Power Flow Jacobian Matrix," IEEE Transactionson Smart Grid, vol. 7, no. 5, pp. 2507-2515, Sept. 2016.

Summary of Invention

Technical Problem

However, in the above-described related art, there is a possibility that the power system cannot be appropriately stabilized.

For example, in Patent Literature 1, based on the fact that the sensitivity coefficient is a generator output with respect to power flow change, if the power flow of the power transmission and substation facilities exceeds the operational limit value, the target output value of the most sensitive generator among generators is calculated in order to resolve the overload in the power system. On the other hand, in Patent Literature 1, the influence of voltage fluctuations and the propagation delay time of measurement information are not taken into account in calculating the sensitivity coefficient, and the case where unstable vibration may occur when the generator output fluctuates is not assumed, which leads to a possibility that the power system cannot be appropriately stabilized.

For example, in Patent Literature 2, the output from the generator and the sensitivity of the phase in the system are used in calculating the recovery control means, and the output change constraint of the generator is considered, making it possible to perform the recovery control earlier. On the other hand, in Patent Literature 2, similar to Patent Literature 1, the effects of voltage fluctuations are not taken into account in calculating the sensitivity coefficient, and changes in the system impedance due to meteorological changes are not assumed, which leads to a possibility that the power system cannot be appropriately stabilized.

For example, in Non Patent Literature 1, power flow Jacobian calculation is carried out by the least squares method using time-synchronized voltage and current phasor data. Here, power flow Jacobian calculation has the same role as the power flow sensitivity described in Patent Literature 1 and Patent Literature 2 and can calculate the power flow sensitivity from the movement during the occurrence of a system event, but the effects of voltage fluctuations are not fully taken into account, which leads to a possibility that the power system cannot be appropriately stabilized.

In view of the foregoing, an object of the present invention is to more appropriately support operation for stabilizing a power system.

Solution to Problem

A power system stabilization system according to claim 1 and a power system stabilization method according to claim 8 according to the present invention for solving the problem is provided.

The invention is defined by the independent claims.

Advantageous Effects of Invention

According to the present invention, for example, an operation for stabilizing a power system can be more appropriately supported.

Brief Description of Drawings

Fig. 1 is a diagram illustrating an example of a configuration of a power system adopting a system stabilization system according to first to fourth embodiments.
Fig. 2 is a diagram illustrating an example of a power flow in the power system.
Fig. 3 is a diagram illustrating an example of overload in the power system.
Fig. 4 is a diagram illustrating an example of a change in impedance of a power line.
Fig. 5 is a diagram illustrating an example of a configuration including the power system and the system stabilization system according to the first embodiment.
Fig. 6 is a diagram illustrating an example of a configuration including the system stabilization system according to the first embodiment.
Fig. 7 is a flowchart illustrating an example of overall processing of the system stabilization system according to the first embodiment.
Fig. 8 is a flowchart illustrating an example of dynamic system sensitivity calculation processing according to the first embodiment.
Fig. 9 is a diagram illustrating an example of an input variable and an output variable.

Fig. 10 is a diagram illustrating an example of a neural network.
Fig. 11 is a flowchart illustrating an example of a system abnormality resolution procedure generation processing.
Figs. 12A and 12B are diagrams illustrating an example of display of a system abnormality resolution procedure.
Fig. 13 is a diagram illustrating an example of the effect of the first embodiment.
Fig. 14 is a diagram illustrating an example of a configuration including the system stabilization system according to the second embodiment.
Fig. 15 is a flowchart illustrating an example of system stabilization processing according to the second embodiment.
Fig. 16 is a diagram illustrating an example of a configuration including the system stabilization system according to the third embodiment.
Fig. 17 is a diagram illustrating an example of a configuration including the system stabilization system according to the fourth embodiment.

Description of Embodiments

Prior to description of an embodiment of the present invention, an example of a configuration and a power flow of a power system adopting the embodiment is applied, and an example of a phenomenon to be controlled will be described.

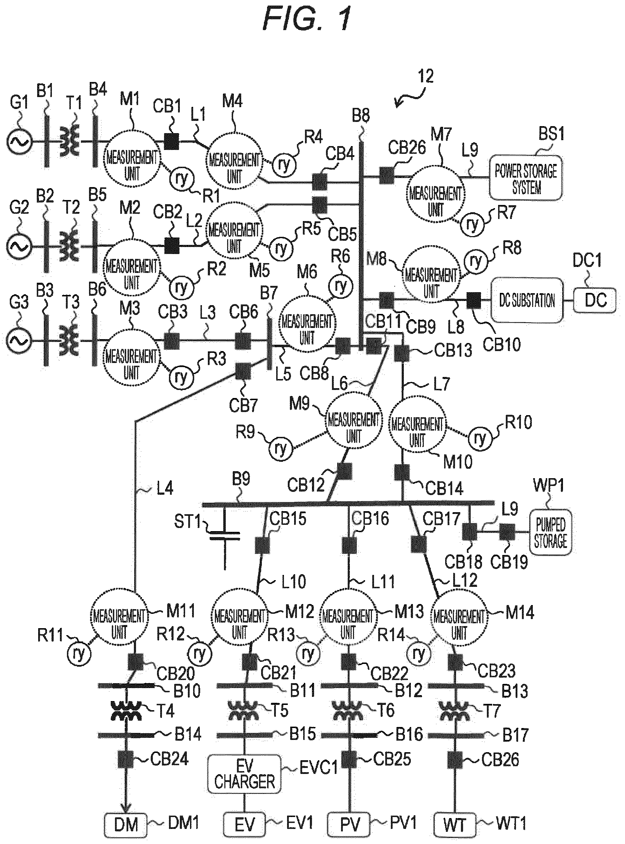

Fig. 1 is a diagram illustrating an example of a configuration of a power system 12 adopting a system stabilization system 1 according to first to fourth embodiments. The power system 12 according to the first to the fourth embodiments is connected with generators G1 to G3, power lines L1 to L12, bus lines B1 to B17 connecting the power lines or distribution lines with each other, circuit breakers CB1 to CB26, transformers T1 to T7 that transform AC voltage, measurement units M1 to M14 that measures various parameters in the power system, relays R1 to R14 adapted to control facilities in the power system, a wind generator WT1 that generates power from wind, a solar power generator PV1 that generates power from sunlight, a pumped-storage generator WP1 that stores electricity using water, a power storage system BS1 that stores electricity, a reactive power supplier ST1 used for voltage adjustment, a consumer DM1 that consumes power, an electric vehicle EV1 that consumes power, an electric vehicle charging station EVC1 through which the electric vehicle EV1 is connected to the power system, and a DC power line DC1. The types and numbers of elements included in the power system 12 illustrated in Fig. 1 are examples, and are not limited to those in the figure. The power system 12 may include a phase regulator.

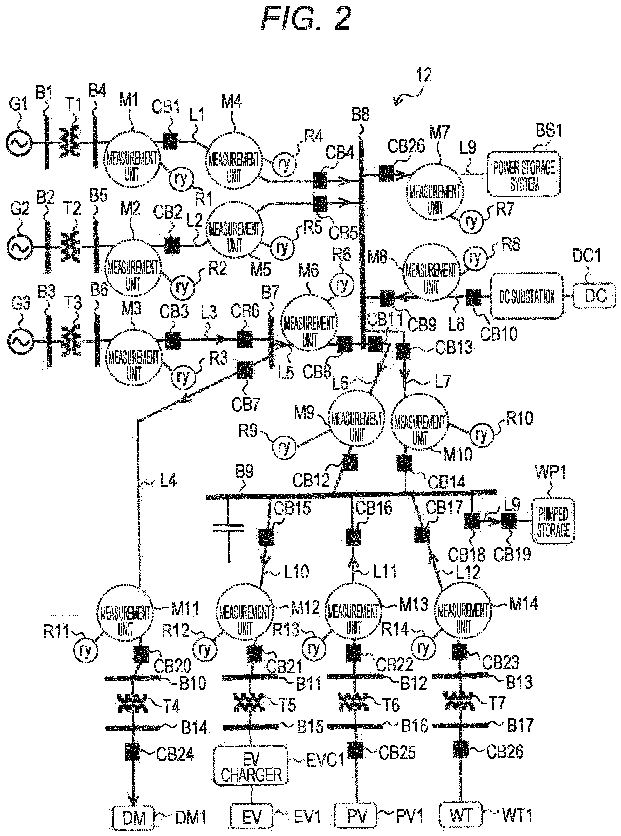

Fig. 2 is a diagram illustrating an example of a power flow (flow of power) in the power system 12. The power generated by the generators G1 to G3 is transmitted to the consumer DM1, the electric vehicle EV1, the pumped-storage generator WP1, and the power storage system BS1, via the transformers T1 to T7, the power lines L1 to L12, the bus lines B1 to B17, the electric vehicle charging station EVC1, and the DC power line DC1. The load of this power flow in the power system is within an appropriate range, whereby stability of the power system is achieved.

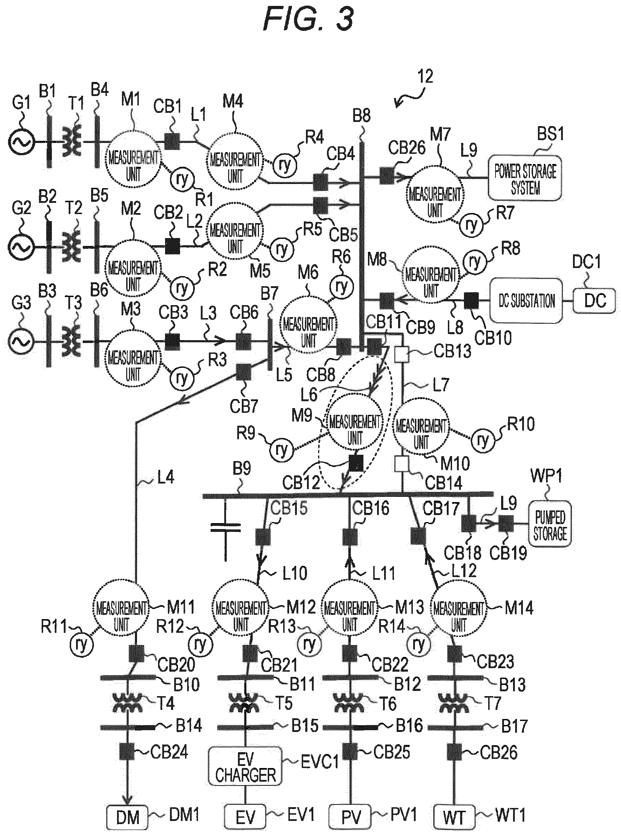

Fig. 3 is a diagram illustrating an example of overload in the power system 12. In this example, a system failure has occurred in the power line L1 to activate the circuit breakers CB13 to CB14 to disconnect the power line L7, leading to a limited transmission route, resulting in another power line L6 overloaded. When the power line L6 is overloaded for a while, the circuit breakers CB11 to CB12 connected to the power line L6 disconnect the power line L6 for power line protection. As a result, other power lines will be similarly overloaded. In this manner a chain reaction of failure may occur. This is known as a cascade failure.

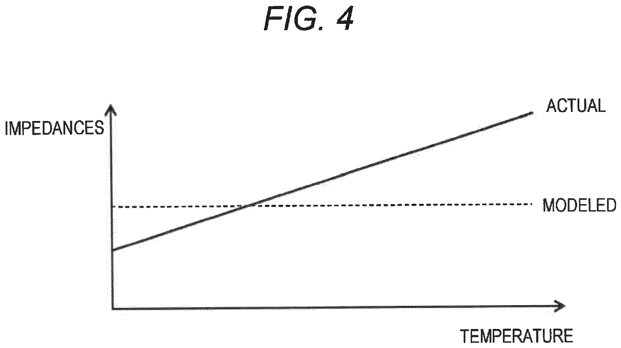

Fig. 4 is a diagram illustrating an example of a change in impedance of a power line. As illustrated in Fig. 4, generally, the impedance of a power line rises due to temperature rise caused by overload or weather fluctuation, and becomes higher than the impedance of a system model. To prevent the cascade failure, a controllable device needs to be controlled in accordance with the impedance change due to the temperature rise caused by the overload and the like, to resolve the overload and the like of the power line.

[First embodiment]

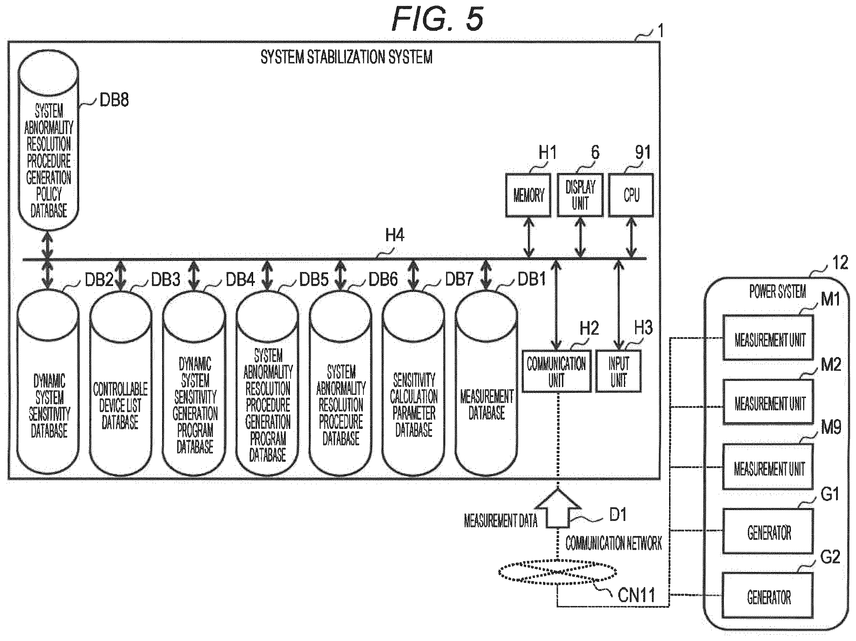

Hereinafter, a first embodiment of the present invention will be described with reference to Fig. 5 to Fig. 13. In the first embodiment, as illustrated in Fig. 3, an example of resolution of the overload of the power line L6 (an example of system abnormality) caused by disconnection of the power line L7 will be described.

Fig. 5 is a diagram illustrating an example of a configuration including the power system 12 and the system stabilization system 1 according to the first embodiment. The system stabilization system 1 is a computer that supports the operation of the power system 12. Various devices in the power system 12 illustrated in Fig. 1 are connected to the system stabilization system 1 via a communication network CN11. Fig. 5 illustrates an example in which the measurement unit M1, the measurement unit M2, the measurement unit M9, the generator G1, and the generator G2 are connected to the system stabilization system 1 via the communication network CN11. Other devices not illustrated in Fig. 5 are similarly connected to the system stabilization system 1 via the communication network CN11.

The system stabilization system 1 has a communication unit H2 serving as an interface for communications with the communication network CN11, an input unit H3 through which information from a user or another system is input, a Central Processing Unit (CPU) 91 for calculation processing, a memory H1 for holding data during calculation, an output unit 6 that outputs calculation results, and various databases. The various databases include a measurement database DB1, a dynamic system sensitivity database DB2, a controllable device list database DB3, a dynamic system sensitivity generation program database DB4, a system abnormality resolution procedure generation program database DB5, a system abnormality resolution procedure database DB6, a sensitivity calculation parameter database DB7, and a system abnormality resolution procedure generation policy database DB8 that are connected to a data bus H4.

The communication unit H2 includes a circuit for connecting to the communication network 11 and a communication protocol. The memory H1 is configured as a Random Access Memory (RAM), and stores a computer program loaded from each program database, calculation result data necessary for each processing, image data, and the like. The memory H1 is a memory for temporarily storing measurement data D1 stored in the measurement database DB1, image data for display on the output unit 6, calculation temporary data and calculation result data obtained by the CPU 91, and the like.

The CPU 91 reads and executes a predetermined computer program from each program database. The CPU 91 may be configured as one or a plurality of semiconductor chips, or may be configured as a computer device such as a calculation server. The CPU 91 executes each program loaded from each program database onto the memory H1, and executes arithmetic processing on data obtained from various databases. In the arithmetic processing, the CPU 91 uses a physical memory of the memory H1, but may also use a virtual memory.

Furthermore, the CPU 91 generates necessary image data and outputs it to the output unit 6 (for example, a display screen). Screen data stored in the memory H1 is sent to the output unit 6 to be displayed. The output unit 6 is configured as, for example, one or more of a display, a printer device, an audio output device, a mobile terminal, and a wearable. Furthermore, the system stabilization system 1 may cooperate with an external system or an external function by using the communication unit H2.

The measurement database DB1 includes the measurement data D1 in power system 12. Here, the measurement data D1 is measurement data including information such as "voltage", "current", "phase", "frequency", "frequency change rate", "active power", "reactive power", and "generator angular velocity" at each timing obtained from the measurement units M1 to M14 of the power system 12. The measurement unit 10 is a measurement device or a measurement instrument examples of which including Phasor Measurement Units (PMU), Voltage Transformer (VT), a Potential Transformer (PT), a Current Transformer (CT), and telemeter (TM), provided in the power system. The measurement data D1 obtained from the measurement units M1 to M14 is aggregated and collected by a measurement value collection device, such as Supervisory Control And Data Acquisition (SCADA), provided in the power system 12.

The dynamic system sensitivity database DB2 stores dynamic system sensitivity D2 generated by executing a dynamic system sensitivity generation program D4 stored in the dynamic system sensitivity generation program database DB4. As will be described in detail later, the dynamic system sensitivity D2 represents a function of an amount change one variable in the measurement data D1 with respect to that of another variable, and is represented by, for example, a matrix, a polynomial, and a neural network.

The controllable device list database DB3 stores a controllable device list D3. The controllable device list D3 includes a list of devices that can be controlled by the system stabilization system 1 or devices that can be controlled using the output of the system stabilization system 1. Here, examples of controllable devices include the circuit breakers, transformers, generators, chargers, power storage systems, pumped-storage generators, reactive power supplier, relays, and phase regulators illustrated in Fig. 1.

The dynamic system sensitivity generation program database DB4 stores a dynamic system sensitivity generation program D4 for generating the dynamic system sensitivity D2. The system abnormality resolution procedure generation program database DB5 stores a system abnormality resolution procedure generation program D5 for generating a system abnormality resolution procedure D6.

The system abnormality resolution procedure database DB6 stores the system abnormality resolution procedure D6 generated by executing the system abnormality resolution procedure generation program D5. As will be described later, the system abnormality resolution procedure D6 includes a procedure for resolving an abnormality of the power system 12 including overload, and the power system 12 is operated in accordance with the procedure in an aim to resolve the abnormality of the power system 12.

The sensitivity calculation parameter database DB7 stores a sensitivity calculation parameter D7 for generating the dynamic system sensitivity D2. The sensitivity calculation parameter D7 is for defining "range of types and range on time series of pieces of measurement data used as input and output", "propagation delay time to be taken into consideration between input and output", "method of removing noise from measurement data", "recalculation condition", "format of sensitivity function", and "method of calculating sensitivity function" for generating the dynamic system sensitivity D2.

The system abnormality resolution procedure generation policy database DB8 stores a system abnormality resolution procedure generation policy D8. The system abnormality resolution procedure generation policy D8 includes policies related to the system abnormality resolution procedure D6, such as target "system abnormality type", "recalculation cycle of system abnormality resolution procedure", "allowable operation amount", "desirable system abnormality resolution time period", and "standby time before the start of abnormality resolution".

The measurement units M1 to M14 included in the power system 12 transmit the measurement values obtained at their respective installation locations in the power system 12, to the communication unit H2 of the system stabilization system 1 via the communication network CN11. The system stabilization system 1 temporarily stores the received measurement data in the memory H1, and then stores it as the measurement data D1 in the measurement database DB1.

In the configuration illustrated in Fig. 5, the input unit H3 may be configured to include, for example, at least one of a keyboard switch, a pointing device such as a mouse, a touch panel, a tablet, an eye-gaze estimation device using a camera, an electroencephalogram conversion device, and a voice instruction device. The input unit H3 may be a user interface other than those described the above.

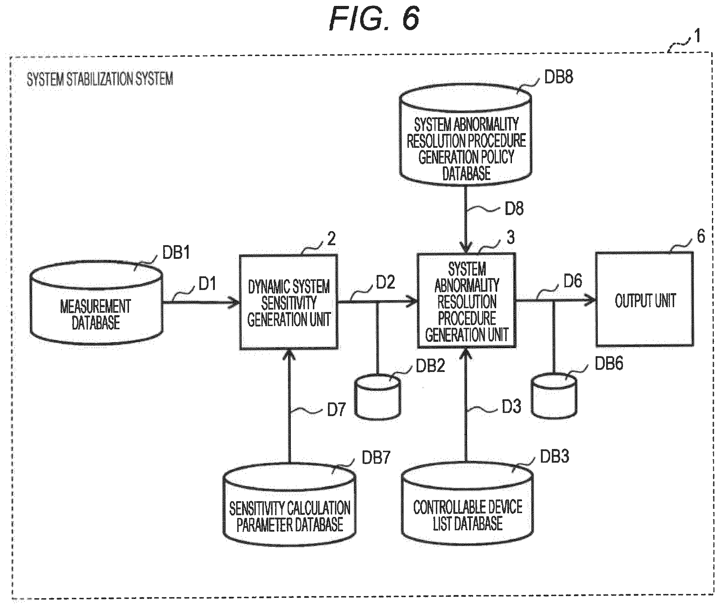

Fig. 6 is a diagram illustrating an example of a configuration including the system stabilization system 1 according to the first embodiment. Fig. 5 illustrates the system stabilization system 1 in terms of hardware configuration, whereas Fig. 6 illustrates the system stabilization system 1 in terms of processing function configuration with a part of the configuration omitted.

The system stabilization system 1 includes the measurement data D1, the controllable device list D3, the sensitivity calculation parameter D7, the system abnormality resolution procedure generation policy D8, a dynamic system sensitivity generation unit 2, a system abnormality resolution procedure generation unit 3, and the output unit 6.

As databases related to these types of data, the system stabilization system 1 includes the measurement database DB1, the dynamic system sensitivity database DB2, the controllable device list database DB3, the system abnormality resolution procedure database DB6, the sensitivity calculation parameter database DB7, and the system abnormality resolution procedure generation policy database DB8. The data in these databases is prepared in advance, generated by an intermediate process, or generated as a final output.

The dynamic system sensitivity generation unit 2 generates the dynamic system sensitivity D2 by using the measurement data D1 and the sensitivity calculation parameter D7 as inputs. The system abnormality resolution procedure generation unit 3 generates the system abnormality resolution procedure D6 by using the controllable device list D3 and the system abnormality resolution procedure generation policy D8 as inputs. Details of the processing of the dynamic system sensitivity generation unit 2 and the system abnormality resolution procedure generation unit 3 will be described later.

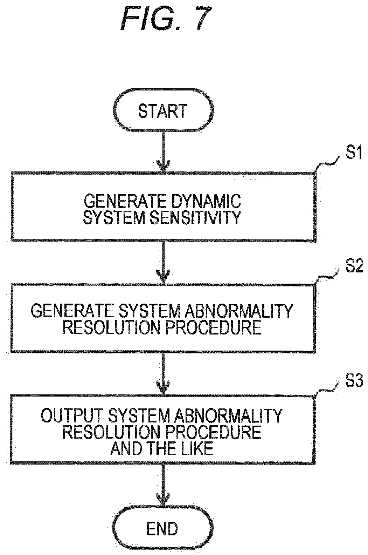

Next, an example of a flow of overall processing of the system stabilization system 1 in the present embodiment will be described with reference to Fig. 7. Fig. 7 is a flowchart illustrating an example of overall processing of the system stabilization system 1 according to the first embodiment. The overall processing of the system stabilization system 1 is periodically executed.

First of all, in step S1, the dynamic system sensitivity generation unit 2 generates and outputs the dynamic system sensitivity D2 by using the measurement data D1 and the sensitivity calculation parameter D7 as inputs. Then, in step S2, the system abnormality resolution procedure generation unit 3 generates and outputs the system abnormality resolution procedure D6 by using the dynamic system sensitivity D2 generated by the dynamic system sensitivity generation unit 2, controllable device list D3, and the system abnormality resolution procedure generation policy D8 as inputs. Subsequently, in step S3, the output unit 6 outputs the system abnormality resolution procedure D6 generated by the system abnormality resolution procedure generation unit 3, and the like.

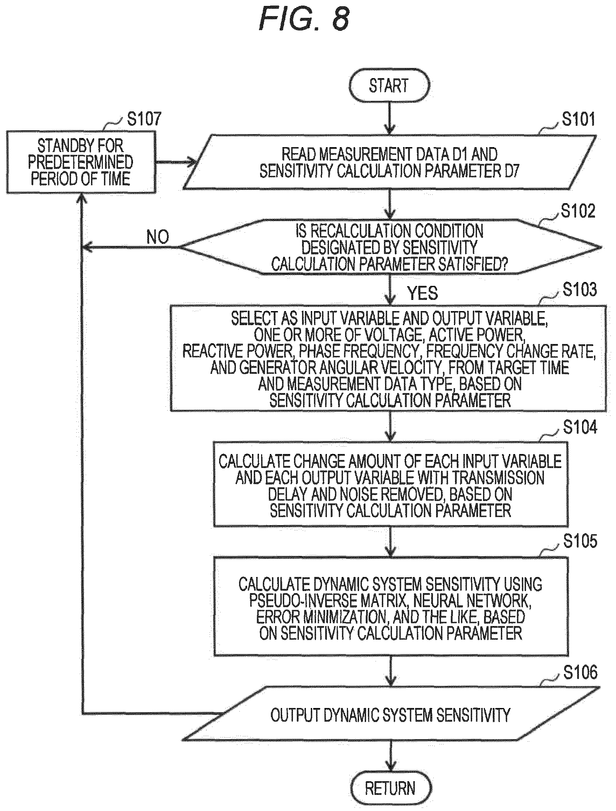

Next, a detailed flow of step S1 in Fig. 7 will be described with reference to Fig. 8. Fig. 8 is a flowchart illustrating an example of dynamic system sensitivity calculation processing according to the first embodiment. First of all, in step S101, the dynamic system sensitivity generation unit 2 reads the measurement data D1 and the sensitivity calculation parameter D7.

Next, in step S102, the dynamic system sensitivity generation unit 2 determines whether the "recalculation condition" designated by the sensitivity calculation parameter D7 is satisfied. The dynamic system sensitivity generation unit 2 proceeds to step S103 when the recalculation condition is satisfied (step S102 Yes), and proceeds to step S107 when the recalculation condition is not satisfied (step S102 No).

Here, in step S102, whether the recalculation of the dynamic system sensitivity D2 is required is determined, for example, based on "recalculation condition" such as whether a predetermined time period has elapsed after the previous calculation of the dynamic system sensitivity D2. This is because, elapse of a predetermined time period after the previous calculation might lead to a change in temperature of power lines and devices, resulting in a change in impedance as illustrated in Fig. 4. Alternatively, whether the recalculation of the dynamic system sensitivity D2 is required may be determined based on "recalculation condition" such as whether the measurement data D1 has changed significantly. The elapse of a predetermined period of time after the previous calculation or the significant change in the measurement data D1 might lead to a significant change in the state of the power system 12, resulting in the previously calculated dynamic system sensitivity D2 being already invalid or starting to have an error. The same applies to a case where a result of checking the sensitivity function indicates an error exceeding a predetermined error.

Therefore, with "recalculation condition" designated in advance by the sensitivity calculation parameter D7, these factors can be taken into consideration. Thus, a disadvantageous situation where an external system using the system stabilization system 1 or the dynamic system sensitivity D2 executes processing based on inappropriate dynamic system sensitivity D2 can be avoided. Furthermore, with the sensitivity calculation parameter D7 periodically updated and input, a situation where the sensitivity calculation parameter D7 is required at a shorter cycle due to an increase in renewable energy sources can also be handled for example.

In step S103, the dynamic system sensitivity generation unit 2 selects, as an input variable x and an output variable y, one or more of the voltage, current, phase, frequency, frequency change rate, active power, reactive power, and generator angular velocity, from the measurement data D1, based on the target time point and the type of the measurement data D1, based on the sensitivity calculation parameter D7.

The input variable x at least includes voltage. In such a case, the power system 12 can be more appropriately stabilized even without the system model sensitivity, with an influence of voltage fluctuation taken into consideration by using the dynamic system sensitivity.

Now, step S103 will be described in detail. The ultimate goal of the dynamic system sensitivity generation unit 2 is to calculate a sensitivity function f represented by the following Formula (1).

[Formula 1]

$$\Delta \mathbf{y} = f(\Delta \mathbf{x}) \cdot \cdot \cdot (1)$$

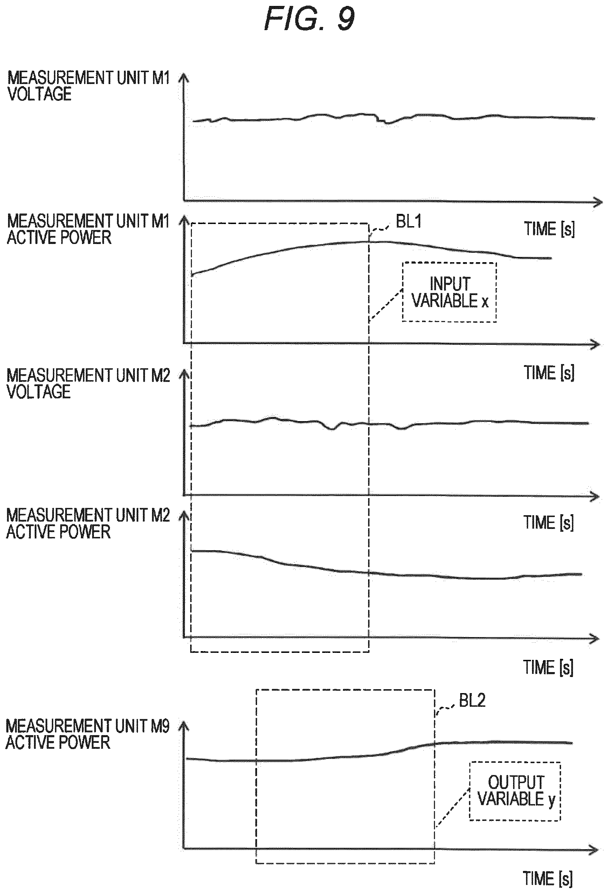

In the formula, $\Delta y$ represents the amount of change in the output variable, and $\Delta x$ represents the amount of change in the input variable. When the sensitivity function f is calculated based on the measurement data D1, the measurement data D1 used for calculating the sensitivity function f needs to be designated. How the input variable and the output variable are designated will be described with reference to Fig. 9.

For example, as shown in Fig. 9, measurement data of the voltage and active power has been obtained by the measurement units M1 and M2 in the power system 12 in Fig. 3, and measurement data of the active power has been obtained by the measurement unit M9. Under this condition, in the sensitivity calculation parameter D7, a range on time series and of measurement types of the measurement data to be input, and a range on time series and of measurement types of the measurement data to be output are designated. Note that the time series for the input and the time series for the output need not to match. In the example of Fig. 9, the input variable x is assumed to be the active power obtained by the measurement unit M1, the voltage and the active power obtained by the measurement unit M2, and the output variable y is assumed to be the active power obtained by the measurement unit M9. Thus, the range of the measurement type of the input variable x includes the active power obtained by the measurement unit M1 and the voltage and the active power obtained by the measurement unit M2. The time series range is a time range indicated by an enclosed broken line BL1 illustrated in Fig. 9. The range of the measurement type of the output variable y includes the active power obtained by the measurement unit M9. The time series range is a time range indicated by an enclosed broken line BL2 illustrated in Fig. 9.

The description is given by referring back to Fig. 8. Next, in step S104, based on the sensitivity calculation parameter D7, the dynamic system sensitivity generation unit 2 calculates an amount of change in each input variable x and each output variable y with propagation delay and noise removed.

Now, step S104 will be described in detail. In step S104, because the input variable x calculated in step S103 may have calculation error and noise, the dynamic system sensitivity generation unit 2 first removes the noise by using the functions of the following Formulae (2) and (3).

[Formula 2]

$$\tilde{x} = n(x) \cdot \cdot \cdot (2)$$

[Formula 3]

$$\tilde{y} = n(y) \cdot \cdot \cdot (3)$$

In the above Formulae (2) and (3), as a function n (-) used for noise removal, a function such as a band-pass filter for removing or suppressing noise at a specific frequency is used. Next, the dynamic system sensitivity generation unit 2 calculates an amount $\Delta x$ of change in the input variable x and an amount $\Delta y$ of change in the output variable y by using a propagation delay time di and a change value calculation interval T designated by the sensitivity calculation parameter D7.

[Formula 4]

$$\Delta \mathbf{x} = [\tilde{x}_1(1 + d_1 + T) - \tilde{x}_1(1), \ldots, \tilde{x}_1(t) - \tilde{x}_1(t - d_1 - T),$$
$$\ldots, \tilde{x}_i(1 + d_i + T) - \tilde{x}_i(1), \ldots, \tilde{x}_i(t) - \tilde{x}_i(t - d_i - T),$$
$$\ldots, \tilde{x}_l(1 + d_l + T) - \tilde{x}_l(1), \ldots, \tilde{x}_l(t) - \tilde{x}_l(t - d_l - T)] \cdot \cdot \cdot (4)$$

[Formula 5]

$$\Delta \mathbf{y} = [\tilde{y}_1(1 + T) - \tilde{y}_1(1), \ldots, \tilde{y}_1(t) - \tilde{y}_1(t - T),$$
$$\ldots, \tilde{y}_j(1 + T) - \tilde{y}_j(1), \ldots, \tilde{y}_j(t) - \tilde{y}_j(t - T),$$
$$\ldots, \tilde{y}_m(1 + T) - \tilde{y}_m(1), \ldots, \tilde{y}_m(t) - \tilde{y}_m(t - T)] \cdot \cdot \cdot (5)$$

In the formulae, xi~ represents the ith input variable in 1 filtered input variables, and yj~ represents the jth output variable in m filtered output variables. Furthermore, the value of the propagation delay time di is prepared to be different among the input variables xi~. Alternatively, the value may be the same among the input variables xi~. When using measurement data over a wide range, a shorter propagation delay time may be provided for an input variable x corresponding to a measurement unit existing in a predetermined vicinity range from the measurement unit corresponding to the output variable y, and a longer propagation delay time may be provided to the input variable x corresponding to the measurement unit outside the predetermined vicinity range.

Next, in step S105, based on the sensitivity calculation parameter D7, the dynamic system sensitivity generation unit 2 calculates the dynamic system sensitivity by calculating a pseudo-inverse matrix, learning a neural network, or performing a polynomial approximation using error minimization.

Now, step S105 will be described in detail. In step S105, the format of the sensitivity function of the above Formula (1) is designated, and the dynamic system sensitivity is calculated according to the designated format.

For example, it is assumed that the format of the sensitivity function is designated as in the following Formula (6). In the case of the following Formula (6), for example, the dynamic system sensitivity can be calculated using a pseudo inverse matrix.

[Formula 6]

$$\Delta \mathbf{y} = A(\Delta \mathbf{x}) \cdot \cdot \cdot (6)$$

As another example, the sensitivity function may be represented by a norm polynomial of $\Delta x$ as in the following Formula (7).

[Formula 7]

$$\Delta \mathbf{y} = a(\Delta \mathbf{x})^2 + b(\Delta \mathbf{x}) + c \cdot \cdot \cdot (7)$$

In this case, linear regression analysis cannot be used, and thus the dynamic system sensitivity is calculated by solving the error minimization problem as in the following Formula (8).

[Formula 8]

$$\min[a(\Delta \mathbf{x})^2 + b(\Delta \mathbf{x}) + c - \Delta \mathbf{y}] \cdot \cdot \cdot (8)$$

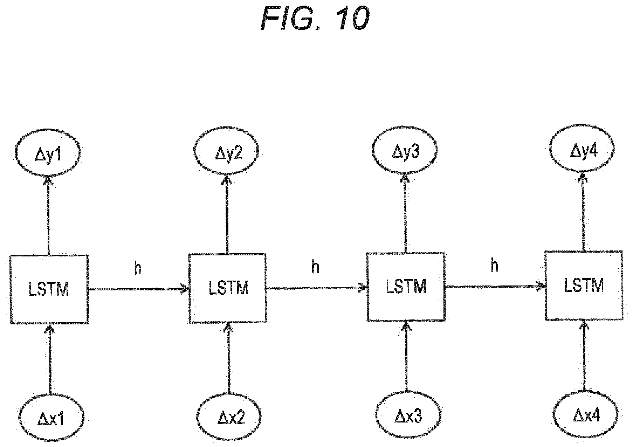

When the neural network is designated as the format in the sensitivity calculation parameter D7, a Long Short Term Memory (LSTM) -based neural network as illustrated in Fig. 10 is learned, and the learned neural network itself may be used as the dynamic system sensitivity D2.

The description is given by referring back to Fig. 8. Next, in step S106, the dynamic system sensitivity generation unit 2 outputs the dynamic system sensitivity calculated in step S105. When step S106 ends, the dynamic system sensitivity generation unit 2 proceeds to step S2 in Fig. 7 and to step S107. In step S107, the dynamic system sensitivity generation unit 2 stands by for a predetermined period of time and then proceeds to step S101 at the next recalculation timing.

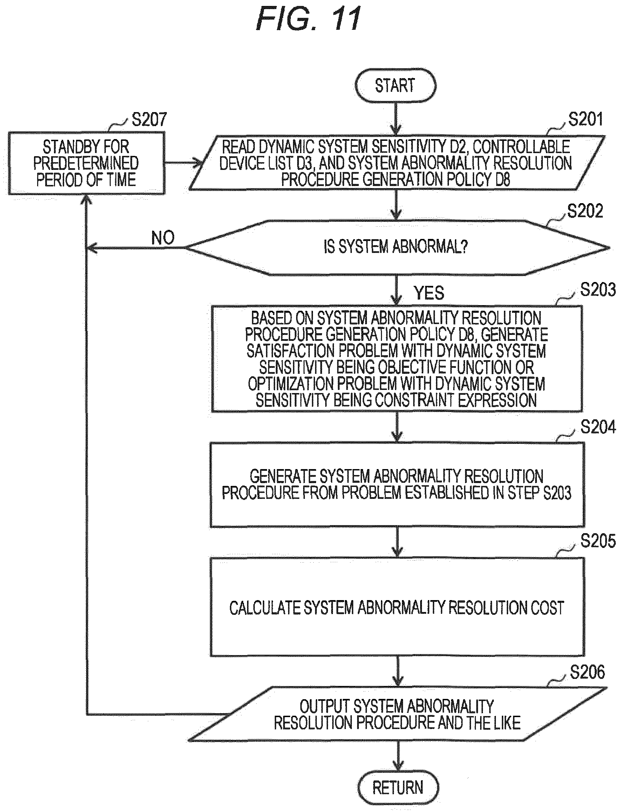

Next, a detailed flow of step S2 in Fig. 7 will be described with reference to Fig. 11. Fig. 11 is a flowchart illustrating an example of a system abnormality resolution procedure generation processing. First, in step S201, the system abnormality resolution procedure generation unit 3 reads the dynamic system sensitivity D2, the controllable device list D3, and the system abnormality resolution procedure generation policy D8.

Next, in step S202, the system abnormality resolution procedure generation unit 3 checks whether there is "system abnormality". The system abnormality resolution procedure generation unit 3 proceeds to step S203 when there is a system abnormality (step S202 YES), and proceeds to step S207 when there is no system abnormality (step S202 NO).

Now, step S202 will be described in detail. The "system abnormality" in step S202 is, for example, occurrence of overload, voltage exceeding or falling below the upper or lower limit, deterioration of the voltage stability, deterioration of the frequency stability, frequency exceeding or falling below the upper or lower limit, deterioration of the synchronization stability, and the like at one or more installation locations of the measurement unit(s) in the power system 12. Methods usable as a method for checking a system abnormality include a method of setting a threshold value for measurement data measured by a measurement unit, extracting a feature through signal processing, determining from a statistical value, and the like.

The description is given by referring back to Fig. 11. Next, in step S203, based on the system abnormality resolution procedure generation policy D8, the system abnormality resolution procedure generation unit 3 generates a satisfaction problem with dynamic system sensitivity being objective function or an optimization problem with dynamic system sensitivity being constraint expression.

Now, step S203 will be described in detail. The system abnormality resolution procedure generation policy D8 includes an allowable operation amount for resolving a system abnormality, a desirable system abnormality resolution time period, and the like. The system abnormality resolution procedure generation unit 3 formulates an optimization problem in Formula (9) with Formula (10) being the constraint expression by using the allowable operation amount and the desirable system abnormality resolution time period.

[Formula 9]

$$\min\{\mathrm{cost}(f(\Delta \mathbf{x}))\} \cdot \cdot \cdot (9)$$

[Formula 10]

$$\mathrm{s.t.} \ \ y_{\mathrm{now}} + f(\Delta \mathbf{x}) \leq y_{\mathrm{constraint}} \cdot \cdot \cdot (10)$$

Here, cost (f(Δx)) in the above Formula (9) represents the cost required for the operation procedure, which means, for example, the time required for resolving the overload. The above Formula (10) indicates that when the input variable Δx is changed from the current state $y_{\mathrm{now}}$ based on the sensitivity function f, the output variable y falls within the normal range.

If the system abnormality resolution procedure generation policy D8 requires no optimality, the objective function itself of the above Formula (9) may be used as the constraint, and the Formula (10) may be replaced with the following Formula (11). Thus, a satisfaction problem corresponding to Formula (9) with the following Formula (11) being the constraint expression may be formulated.

[Formula 11]

$$\mathrm{s.t} \ \ \mathrm{cost}(f(\Delta \mathbf{x})) < \mathrm{cost}_{\mathrm{constraint}} \cdot \cdot \cdot (11)$$

A case is described as an example where an optimization problem is formulated for resolving the overload of the power line by using the dynamic system sensitivity calculated from the voltage V and the active power P as the input variable x and the active power P as the output variable y as shown in Fig. 9. In the case of Fig. 9, the optimization problem corresponding to Formula (12) using the following Formula (13) as a constraint expression is formulated.

[Formula 12]

$$\min\{\mathrm{cost}(f(\Delta \mathbf{V}, \Delta \mathbf{P}))\} \cdot \cdot \cdot (12)$$

[Formula 13]

$$\text{s.t} \quad P_{now}^{line} + f(\Delta \mathbf{V}, \Delta \mathbf{P}) \le P_{max}^{line} \quad \cdots (13)$$

An optimization problem or a satisfactory solution problem may be formulated not only with a constraint for resolution of the system abnormality which is the main object, but also with another constraint for preventing further system abnormality from occurring.

The description will be given while referring back to Fig. 11. Next, in step S204, the system abnormality resolution procedure generation unit 3 generates a system abnormality resolution procedure by solving the problem formulated in step S203. Next, in step S205, the system abnormality resolution procedure generation unit 3 estimates the cost of the system abnormality resolution procedure generated in step S204 (time required for system abnormality resolution). Next, in step S206, the system abnormality resolution procedure generation unit 3 outputs the system abnormality resolution procedure and the like generated in step S204 to the output unit 6. When step S206 ends, the system abnormality resolution procedure generation unit 3 proceeds to step S3 in Fig. 7 and proceeds to step S207. In step S207, the processing proceeds to step S201 at the next recalculation timing, after a predetermined standby period.

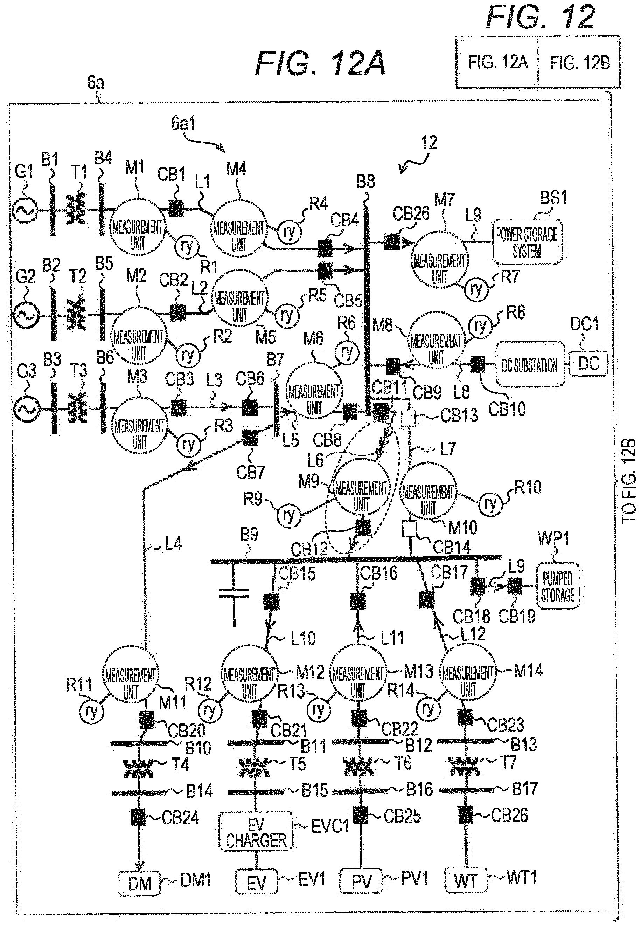

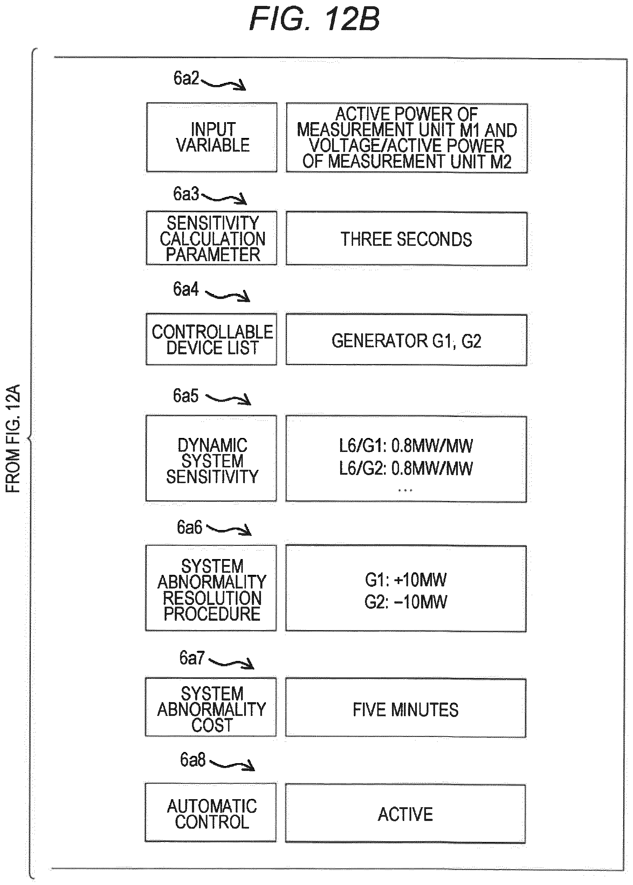

Next, a display example displayed on the output unit 6 in step S3 of Fig. 7 will be described with reference to Figs. 12A and 12B. Figs. 12A and 12B are diagrams illustrating an example of display 6a of the system abnormality resolution procedure. The power system stabilization system 1, which is assumed to be installed at a command center related to the operation of the power system 12, displays the display 6a as illustrated in Figs. 12A and 12B to a power system operator (user).

The display 6a in Figs. 12A and 12B is for displaying, to the power system operator, a power system model 6a1, an input variable 6a2, a sensitivity calculation parameter 6a3, a controllable device list 6a4, dynamic system sensitivity 6a5, a system abnormality resolution procedure 6a6, a system abnormality resolution cost 6a7, automatic control 6a8, and the like.

The power system model 6a1 indicates the current state of the power system 12 in which the power line L6 is overloaded as in the example illustrated in Fig. 3. The input variable 6a2 indicates the type of data to be the input variable, among pieces of measurement data measured by the measurement units installed within a predetermined vicinity area of the controllable device selected from the controllable device list D3 for the calculation of the dynamic system sensitivity D2. The input variable 6a2 includes the active power measured by the measurement unit M1 installed in the vicinity of the generator G1 and the voltage and the active power measured by the measurement unit M2 installed in the vicinity of the generator G2, as in the example illustrated in Fig. 9.

The sensitivity calculation parameter 6a3 indicates, for example, "3 seconds" as the value of the "recalculation condition" in the sensitivity calculation parameter D7. The controllable device list 6a4 indicates the generators G1 and G2 selected as controllable devices from the controllable device list D3 for the calculation of the dynamic system sensitivity D2.

The dynamic system sensitivity 6a5 indicates the dynamic system sensitivity D2 generated by the dynamic system sensitivity generation unit 2 based on the input variable as indicated by the input variables 6a2 and the output variable. In Fig. 12B, the dynamic system sensitivity 6a5 indicates the amount of change in the active power of the power line L6 with respect to an output operation amount of the generator G1, and the amount of change in the power of the power line L6 with respect to an output operation amount of the generator G2. For example, L6/G1:0.8 MW/MW indicates that a change in the power generation amount of the generator G1 by 1 MW results in the active power of the power line L6 changed by 0.8 MW. The same applies to L6/G1:0.8 MW/MW for generator G2.

The system abnormality resolution procedure 6a6 is a system abnormality resolution procedure generated by the system abnormality resolution procedure generation unit 3. In Fig. 12B, the system abnormality resolution procedure 6a6 indicates a system abnormality resolution procedure including incrementing the output of the generator G1 by +10 MW and decrementing the output of the generator G2 by - 10 MW.

The system abnormality resolution cost 6a7 indicates a time period between the start of the procedure indicated by the system abnormality resolution procedure 6a6 and the resolution of the system abnormality, and is "five minutes" in the example illustrated in Fig. 12B. The automatic control 6a8 indicates whether a function of automatically executing the system abnormality resolution procedure 6a6, described later in a third embodiment, is active or not.

The power system operator can refer to the display 6a when drafting countermeasures for a system abnormality.

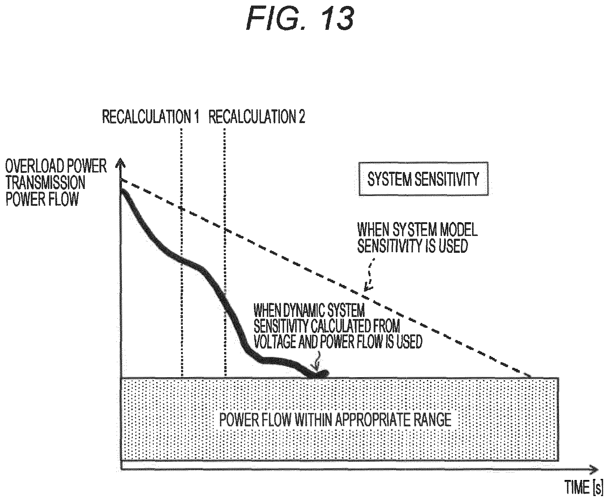

Next, the effects of the present embodiment will be described with reference to Fig. 13. Fig. 13 is a diagram illustrating an example of the effect of the first embodiment. The graph in Fig. 13 illustrates a comparative image for overload resolution, with the horizontal axis representing time, the vertical axis representing the power flow in the overloaded power line, the dashed line representing a change in power flow in a case where the system model sensitivity based on the system impedance (system model base) is used, and a solid line representing a change in the power flow current in a case where the dynamic system sensitivity is used.

When the system model sensitivity is used, it takes time to complete the countermeasure. On the other hand, when the dynamic system sensitivity is used, the countermeasure can be reviewed ("RECALCULATION 1" and "RECALCULATION 2" in Figs. 12A and 12B (corresponding to the execution cycle of the dynamic system sensitivity calculation processing in Fig. 8)) in accordance with a trend of the measurement data D1 based on the setting of the sensitivity calculation parameter D7. Therefore, a countermeasure can be taken more swiftly, so that the power system can be mode effectively stabilized.

The present embodiment can provide the system stabilization system 1 that can provide appropriate operation support to systems, devices, people, and the like related to the operation of the power system for the sake of stabilization of the power system. Furthermore, with the present embodiment, no power system impedance information is required, and the system abnormality can be resolved based on the measurement value measured by the measurement units. Thus, the power system can be stabilized even in a system with incomplete impedance information. A method of linking with a system model including an impedance map will be described later as a second embodiment.

In this embodiment, overload is the target, but as described above, other events in the power system can be addressed.

[Second embodiment]

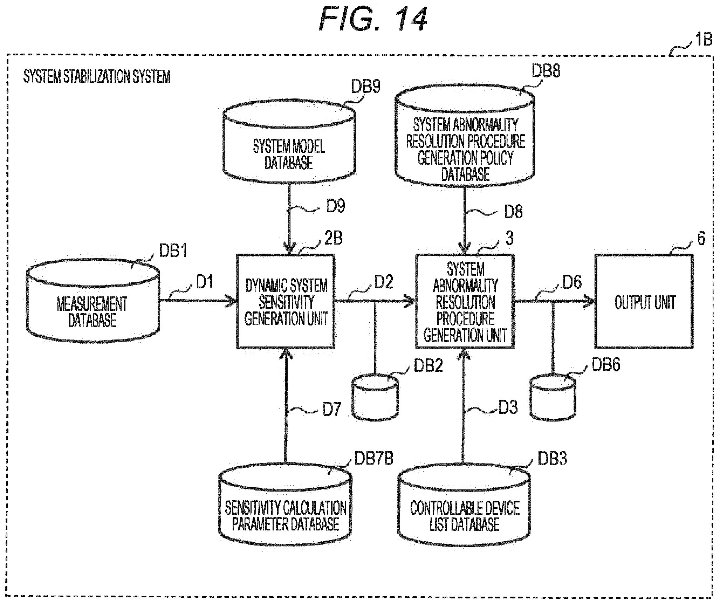

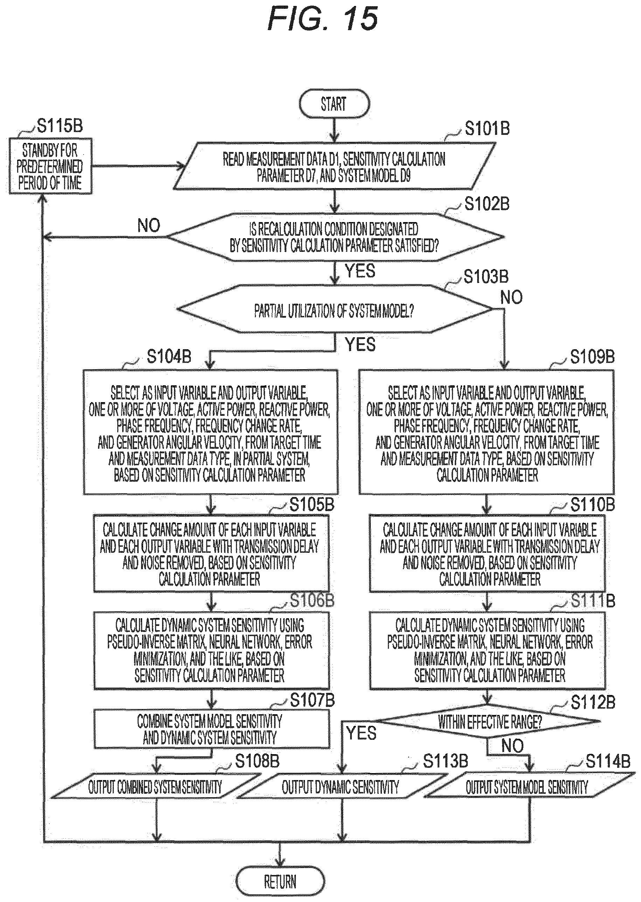

The second embodiment of the present invention will be described with reference to Figs. 14 and 15. In the second embodiment, a case where an existing dynamic system model sensitivity is combined with the dynamic system sensitivity according to the first embodiment will be described.

Fig. 14 is a diagram illustrating an example of a configuration including the system stabilization system 1B according to the second embodiment. The system stabilization system 1B is different from the system stabilization system 1 according to the first embodiment, in that a system model database DB9 is further provided, that a dynamic system sensitivity generation unit 2B is provided instead of the dynamic system sensitivity generation unit 2, and that a sensitivity calculation parameter database DB7B is provided instead of the sensitivity calculation parameter database DB7.

The system model database DB9 stores a system model D9 including one or more pieces of impedance information between branches and connection information between nodes in a target power system. The system model D9 is input to the dynamic system sensitivity generation unit 2B. The sensitivity calculation parameter D7B stored in the sensitivity calculation parameter database DB7B includes a policy of partially utilizing the system model.

Next, dynamic system sensitivity calculation processing according to the second embodiment will be described with reference to Fig. 15. Fig. 15 is a flowchart illustrating an example of dynamic system sensitivity calculation processing according to the second embodiment. In the second embodiment, dynamic system sensitivity calculation processing illustrated in Fig. 15 is executed instead of the dynamic system sensitivity calculation processing according to the first embodiment illustrated in Fig. 8.

First of all, in step S101B, the dynamic system sensitivity generation unit 2B reads the measurement data D1, the sensitivity calculation parameter D7B, and the system model D9. Next, in step S102B, the dynamic system sensitivity generation unit 2B determines whether the "recalculation condition" designated by the sensitivity calculation parameter D7B is satisfied. The dynamic system sensitivity generation unit 2B proceeds to step S103B when the recalculation condition is satisfied (step S102B Yes), and proceeds to step S115B when the recalculation condition is not satisfied (step S102B No).

In step S103B, the dynamic system sensitivity generation unit 2B determines whether the partial utilization of the system model D9, read in step S101B, is designated by the sensitivity calculation parameter D7B. The dynamic system sensitivity generation unit 2B proceeds to step S104B when the system model D9 is partially used (step S103B YES), and proceeds to step S109B when the system model D9 is not partially used (step S103B NO).

In steps S104B to S106B, the dynamic system sensitivity generation unit 2B executes processing that is the same processing as that in steps S103 to S105 in Fig. 8 on a part of the system as a target of the dynamic system sensitivity is calculation.

In step S107B following step S106B, the dynamic system sensitivity generation unit 2B combines the system model sensitivity with the dynamic system sensitivity calculated in step S107B to generate the system sensitivity as the dynamic system sensitivity D2 of the target power system.

Now, step S107B will be described in detail. When the impedance in the power system is known, the sensitivity of the system model D9 (system model sensitivity) can be obtained from an inverse impedance matrix based on a DC method. As a result, system model sensitivity A as represented by the following Formula (14) is obtained.
[Formula 14]

$$\Delta \mathbf{P}^{\text{line}} = A * \Delta \mathbf{P}_i \cdot \cdot \cdot (14)$$

When the dynamic system sensitivity as calculated in the first embodiment is used for a j-th partial system, the term of the system model sensitivity of the j-th partial system in the above Formula (14) is replaced with the dynamic system sensitivity function f, whereby the following Formula (15) is obtained.
[Formula 15]

$$\Delta \mathbf{P}^{\text{line}} = A * \Delta \mathbf{P}_k + f\left(\Delta \mathbf{P}_j, \Delta \mathbf{V}_j\right) \cdot \cdot \cdot (15)$$

The description will be given by referring back to Fig. 15. Next, in step S108B, the dynamic system sensitivity generation unit 2B outputs the dynamic system sensitivity D2 generated in step S107B.

In steps S109B to S111B, the dynamic system sensitivity generation unit 2B performs processing that is the same as that in steps S103 to S105 in Fig. 8, respectively.

Next, in step S112B, based on the error between the dynamic system sensitivity calculated in step S111B and the system model sensitivity of the system model D9, the dynamic system sensitivity generation unit 2B determines whether the dynamic system sensitivity calculated in step S111B is within an effective range.

Specifically, in step S112B, the dynamic system sensitivity generation unit 2B calculates the absolute value of the difference between the system model sensitivity calculated with the above Formula (14) and the dynamic system sensitivity calculated in step S111B with an error range $\varepsilon$ included in the sensitivity calculation parameter D7B. Then, when the following Formula (16) holds true, the dynamic system sensitivity generation unit 2B determines that the dynamic system sensitivity calculated in step S111B is within the effective range (step S112B YES), and proceeds to step S113B. On the other hand, when the following Formula (16) does not holds true, the dynamic system sensitivity generation unit 2B determines that the dynamic system sensitivity calculated in step S111B is outside the effective range (step S112B NO), and proceeds to step S114B.
[Formula 16]

$$|A * \Delta \mathbf{P}_i - f(\Delta \mathbf{P}_i, \Delta \mathbf{V}_i)| < \varepsilon \cdot \cdot \cdot (16)$$

In step S113B, the dynamic system sensitivity generation unit 2B outputs the dynamic system sensitivity D2 calculated in step S111B. In step S114B, the dynamic system sensitivity generation unit 2B outputs the system model sensitivity calculated based on the system model D9 read in step S101B instead of the dynamic system sensitivity D2. When step S108B, 113B, or 114B ends, the dynamic system sensitivity generation unit 2B proceeds to step S2 in Fig. 7 and to step S115B. The processing in step S115B is the same as that in step S107 in Fig. 8.

According to the present embodiment, the dynamic system sensitivity is combined with the system model sensitivity, so that occurrence of an abnormality in the dynamic system sensitivity due to an abnormality in the measurement data and the like can be prevented, whereby the reliability of the system stabilization system 1B can further be improved.

[Third embodiment]

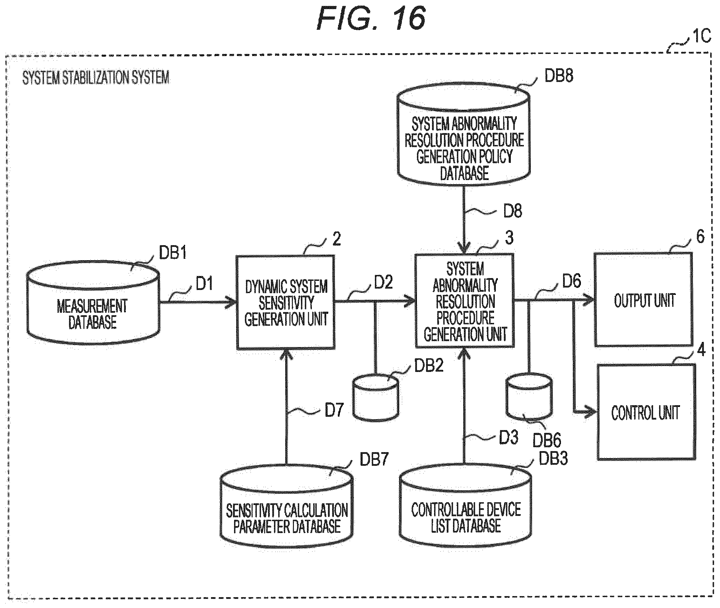

In the third embodiment, a system stabilization system 1C obtained by adding an automatic control function for the power system 12 is added to the system stabilization system 1 of the first embodiment or the system stabilization system 1B of the second embodiment will be described. Fig. 16 is a diagram illustrating an example of a configuration including the system stabilization system 1C according to the third embodiment.

Fig. 16 illustrates a functional block diagram in which a control unit 4 is added to the system stabilization system 1 according to the first embodiment. The control unit 4 transmits a control signal to control target devices in various parts of the power system 12 via the communication network CN11 based on the system abnormality resolution procedure D6 calculated by the system abnormality resolution procedure generation unit 3. The control unit 4 may receive a command to activate automatic control input by a user.

According to the present embodiment, the system stabilization system 1C can more quickly and accurately stabilize the power system 12 by directly controlling the power system 12, in response to a system abnormality. Furthermore, the DC power line DC1, the power storage system BS1, the pumped-storage generator WP1, the solar power generation facility PV1, the wind generator WT1, the electric vehicle charging station EVC1, and the like, as shown in Fig. 1, that are difficult to directly control by the decision of the user can be controlled.

[Fourth embodiment]

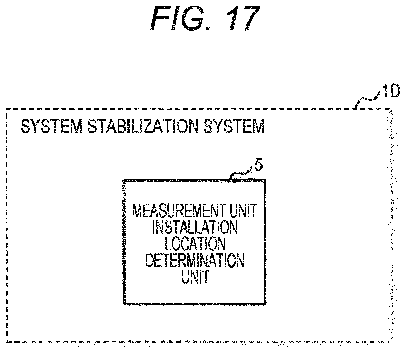

In the fourth embodiment, a method for determining an installation location of a measurement unit for efficiently acquiring system status data in a system stabilization system will be described. Fig. 17 is a diagram illustrating an example of a configuration including the system stabilization system 1D according to the fourth embodiment. The system stabilization system 1D has a configuration in which the measurement unit installation location determination unit 5 is added to the system stabilization systems 1 to 1C of the first to third embodiments. In Fig. 17, configurations other than a measurement unit installation location determination unit 5 is omitted.

As described below, the measuring unit installation location determination unit 5 is a non-von Neumann computer that outputs an installation location of a measurement unit by using the connection configuration, the number of redundant measurements, and the positions of the existing measurement units of the system as inputs.

In order to monitor the state of the power system 12, generally, by a measurement unit is installed on the bus line, so that the power flow of the power line and the voltage of the bus can be measured. The PMU described in the first embodiment can be installed on a single bus line to be capable of measuring the power flow of all the power lines and distribution lines connected to the bus line on which the PMU is installed.

In power system operation, ideally, the measurement units are installed on all the bus lines. However, the measuring units that can be installed may be limited due to various restrictions.

Therefore, in the present embodiment, the optimum installation locations of the measurement units are determined as follows. Specifically, the user of the system stabilization system 1D inputs the connection configuration of the power system 12, the number of redundant measurements, and the positions of the existing measurement units. Then, a single objective function corresponding to conditions that the required number of measurement units is minimum, the measurement units can monitor all bus lines, and that the required number of measurement units are able to be secured with the value of the variable only capable of being 0 or 1 is obtained and converted into an Ising model with which the value of the variable can be represented by -1 or 1, and calculation is performed by the non-von Neumann computer.

Therefore, basically, the installation location of the measurement unit needs to be determined based on the objective function represented by the following Formula (17) .

[Formula 17]

$$\min \sum_{i=1}^{N} d_i * q_i \quad \cdot \quad \cdot \quad \cdot \quad (17)$$

In the formula, $d_i$ represents the cost required for installing a measurement unit on the i-th bus line, and $q_i$ represents whether to install the measuring unit on the i-th bus line. Furthermore, N represents the number of bus lines in the system. It should be noted that $q_i = \{0, 1\}$ holds, $q_i = 1$ holds when the measurement unit is installed on the i-th bus line, and $q_i = 0$ holds when the measuring unit is not installed.

In addition, in order to determine a required measurement unit, the measuring unit needs to be installed on one or more of the bus lines connected via the power line. A matrix C as in the following Expression (18), which represents a connection state between the bus lines, is introduced.

[Formula 18]

$$C_{i,j} = \begin{cases} 1 | \{\text{Bus i and j are connected or i} = \text{j}\} \\ 0 | \{\text{Bus i and j are not connected}\} \end{cases} \quad \cdot \quad \cdot \quad \cdot \quad (18)$$

For example, $C_{1,2} = 1$ indicates that a bus line 1 and a bus line 2 are connected, and $C_{1,2} = 0$ indicates that the bus line 1 and bus line 2 are not connected. In order to monitor each bus line, at least one of the bus lines connected to the connected bus line i needs to be selected. Thus, a constraint as in the following Formula (19) is required.

[Formula 19]

$$\sum_{j=1}^{N} C_{i,j} q_i \geq 1 \quad \cdot \quad \cdot \quad \cdot \quad (19)$$

The constraint as in the above Formula (19) indicates that the total value of the installed measurement units capable of monitoring the bus line i is 1 or more. Using the same principle, for example, when the number of units is desired to be $V_i$ or more in preparation for an emergency device failure, the following Formula (20) is used.

[Formula 20]

$$\sum_{j=1}^{N} C_{i,j} q_i \geq V_i \cdot \cdot \cdot (20)$$

Here, it is assumed that $1 \leq V_i \leq N \mid V_i \in$ the set of all natural numbers. If there is already one or more measurement units in the same group, $V_i$ may be appropriately reduced.

The following Formula (21) represents the Quadratic Unconstrained Binary Optimization (QUBO) formulation of such a constraint.

[Formula 21]

$$\gamma \left[ \left( 1 - \sum_{n=1}^{V_i} y_n \right)^2 + \left( \sum_{n=1}^{V_i} V_i y_n - C_{i,j} q_i \right)^2 \right] \cdot \cdot \cdot (21)$$

Through combination with the objective function assuming that $y_i = \{0,1\}$ holds, the objective function expressed by the following Formula (22) is formulated.

[Formula 22]

$$\min \sum_{i=1}^{N} d_i q_i + \sum_{i=1}^{n} \gamma \left[ \left( 1 - \sum_{n=1}^{V_i} y_n \right)^2 + \left( \sum_{n=1}^{V_i} V_i y_n - C_{i,j} q_i \right)^2 \right] \cdot \cdot \cdot (22)$$

The objective function as in the above Formula (22) is an NP-hard problem, and thus is difficult to calculate directly. Thus, the function is input to a non-von Neumann computer that minimizes the energy of the Ising model, to obtain a solution.

The Ising model minimizes the energy represented by the following Formula (23). It is assumed that $o_i = \{-1,1\}$. The objective function is converted to an Ising model using $q_i = (\sigma_i + 1)/2$ to determine $q_i$ and calculate the required position of the measurement unit.

[Formula 23]

$$\sum J_{i,j} \sigma_i \sigma_j + \sum h_i \sigma_i \cdot \cdot \cdot (23)$$

1, 1B, 1C, 1D System stabilization system
2, 2B Dynamic system sensitivity generation unit
3 System abnormality resolution procedure generation unit
4 Control unit
5 Measurement unit installation location determination unit
12 Power system

**Claims**

1.  A power system stabilization system configured to support stabilization of a power system, the power system stabilization system comprising:

    a dynamic system sensitivity generation unit (2) configured to generate dynamic system sensitivity of the power system by using measurement data (D1) obtained by a plurality of measurement units installed in the power system and a sensitivity calculation parameter (d7) as inputs;
    a system abnormality resolution procedure generation unit (3) that, using the dynamic system sensitivity, a controllable device list indicating a controllable device in the power system, and a system abnormality resolution procedure generation policy as inputs, is configured to generate a system abnormality resolution procedure with which the power system is operated with the controllable device controlled to resolve a system abnormality in the power system; and

an output unit (6) configured to output the system abnormality resolution procedure, **characterized in that** the dynamic system sensitivity is a sensitivity function that is configured to indicate an amount of change in an output variable (y) relative to an amount of change in an input variable (x), wherein measurement data (D1) obtained by a first measurement unit of the plurality of measurement units in the power system represents the input variable (x) and measurement data (D1) obtained by a second measurement unit of the plurality of measurement units represents the output variable (y), wherein

the sensitivity calculation parameter (d7) includes a range of measurement types of the measurement data (D1) and a time range of the measurement data (D1) to be input and output for generating the dynamic system sensitivity, a propagation delay time to be taken into consideration between the input variable (x) and the output variable (y), a recalculation condition of the dynamic system sensitivity, and a format of the sensitivity function, wherein the dynamic system sensitivity generation unit (2) is configured to calculate, when the recalculation condition designated by the sensitivity calculation parameter (d7) is satisfied, the dynamic system sensitivity from the amount of change in the output variable (y) relative to the input variable (x), the input variable (x) and the output variable (y) being selected as one or more of voltage, current, phase, frequency, frequency change rate, active power, reactive power, and generator angular velocity from the measurement data (D1), based on the range of measurement types of the measurement data (D1) and the time range of the measurement data (D1) designated to be input and output by the sensitivity calculation parameter (d7), and wherein the input variable (x) at least includes the voltage, and wherein

when calculating the amount of change, the dynamic system sensitivity generation unit (2) is configured to designate the range of measurement types of the measurement data (D1) and the time series of the measurement data (D1) to be input and output based on the sensitivity calculation parameter (d7) to select the input variable (x) and the output variable (y), and to remove propagation delay and noise of each measurement data (D1) of the input variable (x) and the output variable (y).

2. The power system stabilization system according to claim 1, wherein the format of the sensitivity function is any of a matrix, a polynomial, and a neural network.

3. The power system stabilization system according to claim 1, wherein the controllable device includes one or more of a breaker, a transformer, a generator, a charger, a power storage system, a pumped-storage generator, a reactive power supplier, a phase regulator, and a relay.

4. The power system stabilization system according to claim 1, wherein the system abnormality resolution procedure generation policy includes at least one of a type of the system abnormality, a recalculation cycle of the system abnormality resolution procedure, a time required for resolving the system abnormality, and a standby time until the system abnormality starts to be resolved.

5. The power system stabilization system according to claim 1, wherein the dynamic system sensitivity generation unit (2) is configured to generate dynamic system sensitivity of a partial system of the power system, and to output system sensitivity as a result of replacing a part of system model sensitivity generated from a system model of the power system corresponding to the partial system with the dynamic system sensitivity of the partial system.

6. The power system stabilization system according to claim 1, wherein the dynamic system sensitivity generation unit (2) is configured to determine whether the dynamic system sensitivity is within an effective range based on an error of the dynamic system sensitivity with respect to system model sensitivity generated from a system model of the power system, and to output the dynamic system sensitivity when the dynamic system sensitivity is within the effective range and outputs the system model sensitivity when the dynamic system sensitivity is outside the effective range.

7. The power system stabilization system according to claim 1, further comprising:
a control unit (4) configured to control the controllable device based on the system abnormality resolution procedure.

8. A power system stabilization method executed by a power system stabilization system that supports stabilization of a power system, the method comprising:

generating dynamic system sensitivity of the power system by using measurement data (D1) obtained by a plurality of measurement units installed in the power system and a sensitivity calculation parameter (d7) as inputs; generating, using the dynamic system sensitivity, a controllable device list indicating a controllable device in the power system, and a system abnormality resolution procedure generation policy as inputs, a system abnormality resolution procedure with which the power system is operated with the controllable device controlled to resolve a system abnormality in the power system;

outputting the system abnormality resolution procedure, **characterized by**

indicating an amount of change in an output variable (y) relative to an amount of change in an input variable (x) from the dynamic system sensitivity, which is a sensitivity function , wherein measurement data (D1) obtained by a first measurement unit of the plurality of measurement units in the power system representing the input variable (x) and measurement data (D1) obtained by a second measurement unit of the plurality of measurement units representing the output variable (y), wherein

the sensitivity calculation parameter (d7) includes a range of measurement types of the measurement data (D1) and a time range of the measurement data (D1) to be input and output for generating the dynamic system sensitivity, a propagation delay time to be taken into consideration between the input variable (x) and the output variable (y), a recalculation condition of the dynamic system sensitivity, and a format of the sensitivity function, wherein the dynamic system sensitivity generation unit (2) is configured to calculate, when a recalculation condition designated by a sensitivity calculation parameter (d7) is satisfied, the dynamic system sensitivity from the amount of change in the output variable (y) relative to the input variable (x), the input variable (x) and the output variable (y) being selected as one or more of voltage, current, phase, frequency, frequency change rate, active power, reactive power, and generator angular velocity from the measurement data (D1), based on the range of measurement types of the measurement data (D1) and the time range of the measurement data (D1) designated to be input and output by the sensitivity calculation parameter (d7), , and wherein the input variable (x) at least includes the voltage, and wherein

when calculating the amount of change, the dynamic system sensitivity generation unit (2) is configured to designate the range of measurement types of the measurement data (D1) and the time series of the measurement data (D1) to be input and output based on the sensitivity calculation parameter (d7) to select the input variable (x) and the output variable (y), and to remove propagation delay and noise of each measurement data (D1) of the input variable (x) and the output variable (y).

**Patentansprüche**

1. Leistungssystem-Stabilisierungssystem, das konfiguriert ist, die Stabilisierung eines Leistungssystems zu unterstützen, wobei das Leistungssystem-Stabilisierungssystem Folgendes umfasst:

eine Einheit (2) zum Erzeugen einer dynamischen Systemempfindlichkeit, die konfiguriert ist, eine dynamische Systemempfindlichkeit des Leistungssystems unter Verwendung von Messungsdaten (D1), die durch mehrere Messungseinheiten, die im Leistungssystem installiert sind, erhalten werden, und eines Empfindlichkeitsberechnungsparameters (d7) als Eingaben zu erzeugen;

eine Systemanomalieauflösungsprozedur-Erzeugungseinheit (3), die konfiguriert ist, unter Verwendung der dynamische Systemempfindlichkeit, einer Liste steuerbarer Vorrichtungen, die eine steuerbare Vorrichtung im Leistungssystem angibt, und einer Systemanomalieauflösungsprozedur-Erzeugungsstrategie als Eingaben eine Systemanomalieauflösungsprozedur zu erzeugen, mit der das Leistungssystem betrieben wird, wobei die steuerbare Vorrichtung gesteuert wird, eine Systemanomalie im Leistungssystem zu beheben; und

eine Ausgabeeinheit (6), die konfiguriert ist, die Systemanomalieauflösungsprozedur auszugeben, **dadurch gekennzeichnet, dass**

die dynamische Systemempfindlichkeit eine Empfindlichkeitsfunktion ist, die konfiguriert ist, einen Betrag der Änderung einer Ausgabevariable (y) in Bezug auf einen Betrag der Änderung einer Eingabevariable (x) anzugeben, wobei Messungsdaten (D1), die durch eine erste Messungseinheit der mehreren Messungseinheiten im Leistungssystem erhalten werden, die Eingabevariable (x) repräsentieren und Messungsdaten (D1), die durch eine zweite Messungseinheit der mehreren Messungseinheiten erhalten werden, die Ausgabevariable (y) repräsentieren, wobei

der Empfindlichkeitsberechnungsparameter (d7) einen Bereich von Messungstypen der Messungsdaten (D1) und einen Zeitbereich der Messungsdaten (D1), die zum Erzeugen der dynamischen Systemempfindlichkeit eingegeben und ausgegeben werden sollen, eine Ausbreitungsverzögerungszeit, die zwischen der Eingabevariable (x) und der Ausgabevariable (y) berücksichtigt werden soll, eine Neuberechnungsbedingung der dynamischen Systemempfindlichkeit und ein Format der Empfindlichkeitsfunktion enthält, wobei die Einheit (2) zum Erzeugen einer dynamischen Systemempfindlichkeit konfiguriert ist, dann, wenn die Neuberechnungsbedingung, die durch den Empfindlichkeitsberechnungsparameter (d7) festgelegt ist, erfüllt ist, die dynamische Systemempfindlichkeit vom Betrag der Änderung der Ausgabevariable (y) in Bezug auf die Eingabevariable (x) zu berechnen, wobei die Eingabevariable (x) und die Ausgabevariable (y) als eine Spannung und/oder ein Strom und/oder eine Phase und/oder eine Frequenz und/oder eine Frequenzänderungsrate und/oder eine Wirkleistung und/oder eine Blindleistung und/oder eine Generatorwinkelgeschwindigkeit auf der Grundlage des Bereichs von Messungstypen der Messungsdaten (D1) und des Zeitbereichs der Messungsdaten (D1), die durch den Empfindlichkeitsberechnungsparameter (d7) festgelegt sind, eingegeben und ausgegeben zu werden, aus den Messungsdaten (D1) gewählt sind und die Eingabevariable (x) mindestens die Spannung enthält, und
die Einheit (2) zum Erzeugen einer dynamischen Systemempfindlichkeit konfiguriert ist, dann, wenn der Betrag der Änderung berechnet wird, den Bereich von Messungstypen der Messungsdaten (D1) und die Zeitreihe der Messungsdaten (D1), die eingegeben und ausgegeben werden sollen, auf der Grundlage des Empfindlichkeitsberechnungsparameters (d7) festzulegen, um die Eingabevariable (x) und die Ausgabevariable (y) zu wählen, und eine Ausbreitungsverzögerung und ein Rauschen sämtlicher Messungsdaten (D1) der Eingabevariable (x) und der Ausgabevariable (y) zu entfernen.

2. Leistungssystem-Stabilisierungssystem nach Anspruch 1, wobei
das Format der Empfindlichkeitsfunktion ein beliebiges einer Matrix, eines Polynoms und eines neuronalen Netzes ist.

3. Leistungssystem-Stabilisierungssystem nach Anspruch 1, wobei
die steuerbare Vorrichtung einen Trennschalter und/oder einen Transformator und/oder einen Generator und/oder ein Ladegerät und/oder ein Energiespeichersystem und/oder einen Pumpspeichergenerator und/oder eine Blindleistungsversorgungsvorrichtung und/oder einen Phasenregulierer und/oder ein Relais enthält.

4. Leistungssystem-Stabilisierungssystem nach Anspruch 1, wobei
die Systemanomalieauflösungsprozedur-Erzeugungsstrategie einen Typ der Systemanomalie und/oder einen Neuberechnungszyklus der Systemanomalieauflösungsprozedur und/oder eine Zeit, die zum Beheben der Systemanomalie erforderlich ist, und/oder eine Bereitschaftszeit bis zum Start der Behebung der Systemanomalie enthält.

5. Leistungssystem-Stabilisierungssystem nach Anspruch 1, wobei
die Einheit (2) zum Erzeugen einer dynamischen Systemempfindlichkeit konfiguriert ist, eine dynamische Systemempfindlichkeit eines Teilsystems des Leistungssystems zu erzeugen und eine Systemempfindlichkeit als Ergebnis des Ersetzens eines Teils einer Systemmodellempfindlichkeit, die von einem Systemmodell des Leistungssystems, das dem Teilsystem entspricht, erzeugt wird, durch die dynamische Systemempfindlichkeit des Teilsystems auszugeben.

6. Leistungssystem-Stabilisierungssystem nach Anspruch 1, wobei
die Einheit (2) zum Erzeugen einer dynamischen Systemempfindlichkeit konfiguriert ist, auf der Grundlage eines Fehlers der dynamischen Systemempfindlichkeit in Bezug auf die Systemmodellempfindlichkeit, die von einem Systemmodell des Leistungssystems erzeugt wird, zu bestimmen, ob die dynamische Systemempfindlichkeit in einem wirksamen Bereich ist, und die dynamische Systemempfindlichkeit auszugeben, wenn die dynamische Systemempfindlichkeit im wirksamen Bereich ist, und die Systemmodellempfindlichkeit ausgibt, wenn die dynamische Systemempfindlichkeit außerhalb des wirksamen Bereichs ist.

7. Leistungssystem-Stabilisierungssystem nach Anspruch 1, das ferner Folgendes umfasst:
eine Steuereinheit (4), die konfiguriert ist, die steuerbare Vorrichtung auf der Grundlage der Systemanomalieauflösungsprozedur zu steuern.

8. Leistungssystemstabilisierungsverfahren, das durch ein Leistungssystem-Stabilisierungssystem, das eine Stabilisierung eines Leistungssystems unterstützt, ausgeführt wird, wobei das Verfahren Folgendes umfasst:

Erzeugen einer dynamischen Systemempfindlichkeit des Leistungssystems unter Verwendung von Messungsdaten (D1), die durch mehrere Messungseinheiten, die im Leistungssystem installiert sind, erhalten werden, und eines Empfindlichkeitsberechnungsparameters (d7) als Eingaben;
Erzeugen unter Verwendung der dynamischen Systemempfindlichkeit einer Liste steuerbarer Vorrichtungen, die eine steuerbare Vorrichtung im Leistungssystem angibt, und einer Systemanomalieauflösungsprozedur-Erzeugungsstrategie als Eingaben einer Systemanomalieauflösungsprozedur, mit der das Leistungssystem betrieben wird, wobei die steuerbare Vorrichtung gesteuert wird, eine Systemanomalie im Leistungssystem zu beheben;

Ausgeben der Systemanomalieauflösungsprozedur, **gekennzeichnet durch**

Angeben eines Betrags der Änderung einer Ausgabevariable (y) in Bezug auf einen Betrag der Änderung einer Eingabevariable (x) aus der dynamischen Systemempfindlichkeit, die eine Empfindlichkeitsfunktion ist, wobei Messungsdaten (D1), die durch eine erste Messungseinheit der mehreren Messungseinheiten im Leistungssystem erhalten werden, die Eingabevariable (x) repräsentieren und Messungsdaten (D1), die durch eine zweite Messungseinheit der mehreren Messungseinheiten erhalten werden, die die Ausgabevariable (y) repräsentieren, wobei

der Empfindlichkeitsberechnungsparameter (d7) einen Bereich von Messungstypen der Messungsdaten (D1) und einen Zeitbereich der Messungsdaten (D1), die zum Erzeugen der dynamischen Systemempfindlichkeit eingegeben und ausgegeben werden sollen, eine Ausbreitungsverzögerungszeit, die zwischen der Eingabevariable (x) und der Ausgabevariable (y) berücksichtigt werden soll, eine Neuberechnungsbedingung der dynamischen Systemempfindlichkeit und ein Format der Empfindlichkeitsfunktion enthält, wobei die Erzeugungseinheit (2) einer dynamischen Systemempfindlichkeit konfiguriert ist, dann, wenn eine Neuberechnungsbedingung, die durch einen Empfindlichkeitsberechnungsparameter (d7) festgelegt ist, erfüllt ist, die dynamische Systemempfindlichkeit vom Betrag der Änderung der Ausgabevariable (y) in Bezug auf die Eingabevariable (x) zu berechnen, wobei die Eingabevariable (x) und die Ausgabevariable (y) als eine Spannung und/oder ein Strom und/oder eine Phase und/oder eine Frequenz und/oder eine Frequenzänderungsrate und/oder eine Wirkleistung und/oder eine Blindleistung und/oder eine Generatorwinkelgeschwindigkeit auf der Grundlage des Bereichs von Messungstypen der Messungsdaten (D1) und des Zeitbereichs der Messungsdaten (D1), die durch den Empfindlichkeitsberechnungsparameter (d7) festgelegt sind, eingegeben und ausgegeben zu werden, aus den Messungsdaten (D1) gewählt sind und die Eingabevariable (x) mindestens die Spannung enthält, und

die Einheit (2) zum Erzeugen einer dynamischen Systemempfindlichkeit konfiguriert ist, dann, wenn der Betrag der Änderung berechnet wird, den Bereich von Messungstypen der Messungsdaten (D1) und die Zeitreihe der Messungsdaten (D1), die eingegeben und ausgegeben werden sollen, auf der Grundlage des Empfindlichkeitsberechnungsparameters (d7) festzulegen, um die Eingabevariable (x) und die Ausgabevariable (y) zu wählen, und eine Ausbreitungsverzögerung und ein Rauschen sämtlicher Messungsdaten (D1) der Eingabevariable (x) und der Ausgabevariable (y) zu entfernen.

## Revendications

1. Système de stabilisation de système de puissance configuré pour supporter une stabilisation d'un système de puissance, le système de stabilisation de système de puissance comprenant :

   une unité de génération de sensibilité de système dynamique (2) configurée pour générer une sensibilité de système dynamique du système de puissance en utilisant des données de mesurage (D1) obtenues par une pluralité d'unités de mesurage installées dans le système de puissance et un paramètre de calcul de sensibilité (d7) à titre d'entrées ;

   une unité de génération de procédure de résolution d'anomalie de système (3) qui, en utilisant la sensibilité de système dynamique, une liste de dispositif commandable indiquant un dispositif commandable dans le système de puissance, et une politique de génération de procédure de résolution d'anomalie de système à titre d'entrées, est configurée pour générer une procédure de résolution d'anomalie de système avec laquelle le système de puissance est actionné avec le dispositif commandable commandé pour résoudre une anomalie de système dans le système de puissance ; et

   une unité de sortie (6) configurée pour sortir la procédure de résolution d'anomalie de système,

   **caractérisé en ce que**

   la sensibilité de système dynamique est une fonction de sensibilité qui est configurée pour indiquer une amplitude de changement dans une variable de sortie (y) relativement à une amplitude de changement dans une variable d'entrée (x),

   dans lequel des données de mesurage (D1) obtenues par une première unité de mesurage de la pluralité d'unités de mesurage dans le système de puissance représentent la variable d'entrée (x) et des données de mesurage (D1) obtenues par une seconde unité de mesurage de la pluralité d'unités de mesurage représentent la variable de sortie (y), dans lequel

   le paramètre de calcul de sensibilité (d7) inclut une plage de types de mesurage des données de mesurage (D1) et une plage temporelle des données de mesurage (D1) devant être entrées et sorties pour générer la sensibilité de système dynamique, un temps de retard de propagation devant être pris en considération entre la variable d'entrée (x) et la variable de sortie (y), une condition de recalcul de la sensibilité de système dynamique, et un format de la fonction de sensibilité, dans lequel l'unité de génération de sensibilité de système dynamique (2) est configurée pour calculer, quand la condition de recalcul désignée par le paramètre de calcul de sensibilité (d7) est satisfaite, la sensibilité de système dynamique à partir de l'amplitude de changement dans la variable de sortie (y) relativement à la variable d'entrée (x), la variable d'entrée (x) et la variable de sortie (y) étant sélectionnées comme un ou plusieurs éléments parmi une tension, un courant, une phase, une fréquence, un taux de changement de fréquence, une puissance active, une puissance réactive, et une vitesse angulaire de générateur à partir des données de mesurage (D1), sur la base de la plage de types de mesurage des données de mesurage (D1) et de la plage temporelle des données de mesurage (D1) désignées pour être entrées et sorties par le paramètre de calcul de sensibilité (d7), et dans lequel la variable d'entrée (x) inclut au moins la tension, et

dans lequel, lors du calcul de l'amplitude de changement, l'unité de génération de sensibilité de système dynamique (2) est configurée pour désigner la plage de types de mesurage des données de mesurage (D1) et la série temporelle des données de mesurage (D1) pour être entrées et sorties sur la base du paramètre de calcul de sensibilité (d7) pour sélectionner la variable d'entrée (x) et la variable de sortie (y), et pour supprimer un retard de propagation et un bruit de chaque donnée de mesurage (D1) de la variable d'entrée (x) et de la variable de sortie (y).

2. Système de stabilisation de système de puissance selon la revendication 1, dans lequel
   le format de la fonction de sensibilité est l'un quelconque d'un réseau matriciel, polynomial et neuronal.

3. Système de stabilisation de système de puissance selon la revendication 1, dans lequel
   le dispositif commandable inclut un ou plusieurs éléments parmi un coupecircuit, un transformateur, un générateur, un chargeur, un système de stockage de puissance, un générateur de pompage-turbinage, un alimentateur de puissance réactive, un régulateur de phase et un relais.

4. Système de stabilisation de système de puissance selon la revendication 1, dans lequel
   la politique de génération de procédure de résolution d'anomalie de système inclut au moins un élément parmi un type de l'anomalie de système, un cycle de recalcul de la procédure de résolution d'anomalie de système, un temps requis pour résoudre l'anomalie de système, et un temps de veille jusqu'à ce que l'anomalie de système commence à être résolue.

5. Système de stabilisation de système de puissance selon la revendication 1, dans lequel
   l'unité de génération de sensibilité de système dynamique (2) est configurée pour générer une sensibilité de système dynamique d'un système partiel du système de puissance, et pour sortir une sensibilité de système à titre de résultat de remplacement d'une partie de sensibilité de modèle de système générée à partir d'un modèle de système du système de puissance correspondant au système partiel par la sensibilité de système dynamique du système partiel.

6. Système de stabilisation de système de puissance selon la revendication 1, dans lequel
   l'unité de génération de sensibilité de système dynamique (2) est configurée pour déterminer si la sensibilité de système dynamique est à l'intérieur d'une plage réelle sur la base d'une erreur de la sensibilité de système dynamique par rapport à une sensibilité de modèle de système générée à partir d'un modèle de système du système de puissance, et pour sortir la sensibilité de système dynamique quand la sensibilité de système dynamique est à l'intérieur de la plage réelle. et sort la sensibilité de modèle de système quand la sensibilité de système dynamique est à l'extérieur de la plage réelle.

7. Système de stabilisation de système de puissance selon la revendication 1, comprenant en outre :
   une unité de commande (4) configurée pour commander le dispositif commandable sur la base de la procédure de résolution d'anomalie de système.

8. Procédé de stabilisation de système de puissance exécuté par un système de stabilisation de système de puissance qui supporte une stabilisation d'un système de puissance, le procédé comprenant les étapes consistant à :

   générer une sensibilité de système dynamique du système de puissance en utilisant des données de mesurage (D1) obtenues par une pluralité d'unités de mesurage installées dans le système de puissance et un paramètre de calcul de sensibilité (d7) à titre d'entrées ;
   générer, en utilisant la sensibilité de système dynamique, une liste de dispositif commandable indiquant un dispositif commandable dans le système de puissance, et une politique de génération de procédure de résolution d'anomalie de système à titre d'entrées, une procédure de résolution d'anomalie de système avec laquelle le système de puissance est actionné avec le dispositif commandable commandé pour résoudre une anomalie de système dans le système de puissance ;

sortir la procédure de résolution d'anomalie de système,

**caractérisé par** l'étape consistant à

indiquer une amplitude de changement dans une variable de sortie (y) relativement à une amplitude de changement dans une variable d'entrée (x) à partir de la sensibilité de système dynamique, qui est une fonction de sensibilité, dans lequel des données de mesurage (D1) obtenues par une première unité de mesurage de la pluralité d'unités de mesurage dans le système de puissance représentent la variable d'entrée (x) et des données de mesurage (D1) obtenues par une seconde unité de mesurage de la pluralité d'unités de mesurage représentent la variable de sortie (y),

dans lequel

le paramètre de calcul de sensibilité (d7) inclut une plage de types de mesurage des données de mesurage (D1) et une plage temporelle des données de mesurage (D1) devant être entrées et sorties pour générer la sensibilité de système dynamique, un temps de retard de propagation devant être pris en considération entre la variable d'entrée (x) et la variable de sortie (y), une condition de recalcul de la sensibilité de système dynamique, et un format de la fonction de sensibilité, dans lequel l'unité de génération de sensibilité de système dynamique (2) est configurée pour calculer, quand la condition de recalcul désignée par le paramètre de calcul de sensibilité (d7) est satisfaite, la sensibilité de système dynamique à partir de l'amplitude de changement dans la variable de sortie (y) relativement à la variable d'entrée (x), la variable d'entrée (x) et la variable de sortie (y) étant sélectionnées comme un ou plusieurs éléments parmi une tension, un courant, une phase, une fréquence, un taux de changement de fréquence, une puissance active, une puissance réactive, et une vitesse angulaire de générateur à partir des données de mesurage (D1), sur la base de la plage de types de mesurage des données de mesurage (D1) et de la plage temporelle des données de mesurage (D1) désignées pour être entrées et sorties par le paramètre de calcul de sensibilité (d7), et dans lequel la variable d'entrée (x) inclut au moins la tension, et

dans lequel,

lors du calcul de l'amplitude de changement, l'unité de génération de sensibilité de système dynamique (2) est configurée pour désigner la plage de types de mesurage des données de mesurage (D1) et la série temporelle des données de mesurage (D1) pour être entrées et sorties sur la base du paramètre de calcul de sensibilité (d7) pour sélectionner la variable d'entrée (x) et la variable de sortie (y), et pour supprimer un retard de propagation et un bruit de chaque donnée de mesurage (D1) de la variable d'entrée (x) et de la variable de sortie (y).

# FIG. 1

# FIG. 2

# FIG. 3

FIG. 4

## FIG. 5

*FIG. 6*

EP 3 771 061 B1

# FIG. 7

```
        START

          ↓
┌──────────────────────┐  S1
│   GENERATE DYNAMIC   │
│  SYSTEM SENSITIVITY  │
└──────────────────────┘
          ↓
┌──────────────────────┐  S2
│ GENERATE SYSTEM ABNORMALITY │
│   RESOLUTION PROCEDURE   │
└──────────────────────┘
          ↓
┌──────────────────────┐  S3
│ OUTPUT SYSTEM ABNORMALITY │
│  RESOLUTION PROCEDURE  │
│     AND THE LIKE     │
└──────────────────────┘
          ↓
         END
```

# FIG. 8

```
                              ( START )
                                  │
                                  ▼
```

| S107 | | S101 |
|------|------|------|

**S107** STANDBY FOR PREDETERMINED PERIOD OF TIME

**S101** READ MEASUREMENT DATA D1 AND SENSITIVITY CALCULATION PARAMETER D7

**S102** IS RECALCULATION CONDITION DESIGNATED BY SENSITIVITY CALCULATION PARAMETER SATISFIED?

NO

YES

**S103** SELECT AS INPUT VARIABLE AND OUTPUT VARIABLE, ONE OR MORE OF VOLTAGE, ACTIVE POWER, REACTIVE POWER, PHASE FREQUENCY, FREQUENCY CHANGE RATE, AND GENERATOR ANGULAR VELOCITY, FROM TARGET TIME AND MEASUREMENT DATA TYPE, BASED ON SENSITIVITY CALCULATION PARAMETER

**S104** CALCULATE CHANGE AMOUNT OF EACH INPUT VARIABLE AND EACH OUTPUT VARIABLE WITH TRANSMISSION DELAY AND NOISE REMOVED, BASED ON SENSITIVITY CALCULATION PARAMETER

**S105** CALCULATE DYNAMIC SYSTEM SENSITIVITY USING PSEUDO-INVERSE MATRIX, NEURAL NETWORK, ERROR MINIMIZATION, AND THE LIKE, BASED ON SENSITIVITY CALCULATION PARAMETER

**S106** OUTPUT DYNAMIC SYSTEM SENSITIVITY

( RETURN )

# FIG. 9

MEASUREMENT UNIT M1 VOLTAGE

MEASUREMENT UNIT M1 ACTIVE POWER — BL1 — TIME [s]

INPUT VARIABLE x

MEASUREMENT UNIT M2 VOLTAGE — TIME [s]

MEASUREMENT UNIT M2 ACTIVE POWER — TIME [s]

TIME [s]

MEASUREMENT UNIT M9 ACTIVE POWER — BL2

OUTPUT VARIABLE y

TIME [s]

# FIG. 10

# FIG. 11

**START**

**S207** STANDBY FOR PREDETERMINED PERIOD OF TIME

**S201** READ DYNAMIC SYSTEM SENSITIVITY D2, CONTROLLABLE DEVICE LIST D3, AND SYSTEM ABNORMALITY RESOLUTION PROCEDURE GENERATION POLICY D8

**S202** IS SYSTEM ABNORMAL?

NO / YES

**S203** BASED ON SYSTEM ABNORMALITY RESOLUTION PROCEDURE GENERATION POLICY D8, GENERATE SATISFACTION PROBLEM WITH DYNAMIC SYSTEM SENSITIVITY BEING OBJECTIVE FUNCTION OR OPTIMIZATION PROBLEM WITH DYNAMIC SYSTEM SENSITIVITY BEING CONSTRAINT EXPRESSION

**S204** GENERATE SYSTEM ABNORMALITY RESOLUTION PROCEDURE FROM PROBLEM ESTABLISHED IN STEP S203

**S205** CALCULATE SYSTEM ABNORMALITY RESOLUTION COST

**S206** OUTPUT SYSTEM ABNORMALITY RESOLUTION PROCEDURE AND THE LIKE

**RETURN**

FIG. 12

| FIG. 12A | FIG. 12B |

FIG. 12A

# FIG. 12B

FROM FIG. 12A

6a2

| INPUT VARIABLE | ACTIVE POWER OF MEASUREMENT UNIT M1 AND VOLTAGE/ACTIVE POWER OF MEASUREMENT UNIT M2 |

6a3

| SENSITIVITY CALCULATION PARAMETER | THREE SECONDS |

6a4

| CONTROLLABLE DEVICE LIST | GENERATOR G1, G2 |

6a5

| DYNAMIC SYSTEM SENSITIVITY | L6/G1: 0.8MW/MW<br>L6/G2: 0.8MW/MW<br>... |

6a6

| SYSTEM ABNORMALITY RESOLUTION PROCEDURE | G1: +10MW<br>G2: −10MW |

6a7

| SYSTEM ABNORMALITY COST | FIVE MINUTES |

6a8

| AUTOMATIC CONTROL | ACTIVE |

# FIG. 13

RECALCULATION 1 RECALCULATION 2

OVERLOAD POWER
TRANSMISSION
POWER FLOW

SYSTEM SENSITIVITY

WHEN SYSTEM MODEL
SENSITIVITY IS USED

WHEN DYNAMIC SYSTEM
SENSITIVITY CALCULATED FROM
VOLTAGE AND POWER FLOW IS USED

POWER FLOW WITHIN APPROPRIATE RANGE

TIME [s]

## FIG. 14

SYSTEM STABILIZATION SYSTEM — 1B

DB9 SYSTEM MODEL DATABASE

DB8 SYSTEM ABNORMALITY RESOLUTION PROCEDURE GENERATION POLICY DATABASE

D9

D8

DB1 MEASUREMENT DATABASE

D1

2B DYNAMIC SYSTEM SENSITIVITY GENERATION UNIT

D2

3 SYSTEM ABNORMALITY RESOLUTION PROCEDURE GENERATION UNIT

D6

6 OUTPUT UNIT

DB2

DB6

D7

D3

DB7B SENSITIVITY CALCULATION PARAMETER DATABASE

DB3 CONTROLLABLE DEVICE LIST DATABASE

EP 3 771 061 B1

# FIG. 15

```
                                    ( START )
                                        │
  ┌──────────────┐   S115B            ▼                              S101B
  │  STANDBY FOR │         ╱ READ MEASUREMENT DATA D1, SENSITIVITY CALCULATION ╱
  │ PREDETERMINED│◄────── ╱  PARAMETER D7, AND SYSTEM MODEL D9               ╱
  │ PERIOD OF TIME│                     │
  └──────────────┘                      ▼                              S102B
         ▲          NO   ◄────< IS RECALCULATION CONDITION DESIGNATED >
         │                      < BY SENSITIVITY CALCULATION PARAMETER SATISFIED? >
         │                               │ YES
         │                               ▼                     S103B
         │                      <                              >  NO
         │                      < PARTIAL UTILIZATION OF SYSTEM MODEL? >────┐
         │                      <                              >            │
         │                               │ YES                             │
         │                               │                                 │
         │  S104B                        ▼                         S109B    ▼
         │  ┌──────────────────────────────┐      ┌──────────────────────────────┐
         │  │ SELECT AS INPUT VARIABLE AND   │      │ SELECT AS INPUT VARIABLE AND   │
         │  │ OUTPUT VARIABLE, ONE OR MORE   │      │ OUTPUT VARIABLE, ONE OR MORE   │
         │  │ OF VOLTAGE, ACTIVE POWER,      │      │ OF VOLTAGE, ACTIVE POWER,      │
         │  │ REACTIVE POWER, PHASE          │      │ REACTIVE POWER, PHASE          │
         │  │ FREQUENCY, FREQUENCY CHANGE    │      │ FREQUENCY, FREQUENCY CHANGE    │
         │  │ RATE, AND GENERATOR ANGULAR    │      │ RATE, AND GENERATOR ANGULAR    │
         │  │ VELOCITY, FROM TARGET TIME     │      │ VELOCITY, FROM TARGET TIME     │
         │  │ AND MEASUREMENT DATA TYPE, IN  │      │ AND MEASUREMENT DATA TYPE,     │
         │  │ PARTIAL SYSTEM, BASED ON       │      │ BASED ON SENSITIVITY           │
         │  │ SENSITIVITY CALCULATION        │      │ CALCULATION PARAMETER          │
         │  │ PARAMETER                      │      │                                │
         │  └──────────────────────────────┘      └──────────────────────────────┘
         │              │  S105B                              │  S110B
         │              ▼                                     ▼
         │  ┌──────────────────────────────┐      ┌──────────────────────────────┐
         │  │ CALCULATE CHANGE AMOUNT OF     │      │ CALCULATE CHANGE AMOUNT OF     │
         │  │ EACH INPUT VARIABLE AND EACH   │      │ EACH INPUT VARIABLE AND EACH   │
         │  │ OUTPUT VARIABLE WITH           │      │ OUTPUT VARIABLE WITH           │
         │  │ TRANSMISSION DELAY AND NOISE   │      │ TRANSMISSION DELAY AND NOISE   │
         │  │ REMOVED, BASED ON SENSITIVITY  │      │ REMOVED, BASED ON SENSITIVITY  │
         │  │ CALCULATION PARAMETER          │      │ CALCULATION PARAMETER          │
         │  └──────────────────────────────┘      └──────────────────────────────┘
         │              │  S106B                              │  S111B
         │              ▼                                     ▼
         │  ┌──────────────────────────────┐      ┌──────────────────────────────┐
         │  │ CALCULATE DYNAMIC SYSTEM       │      │ CALCULATE DYNAMIC SYSTEM       │
         │  │ SENSITIVITY USING PSEUDO-      │      │ SENSITIVITY USING PSEUDO-      │
         │  │ INVERSE MATRIX, NEURAL         │      │ INVERSE MATRIX, NEURAL         │
         │  │ NETWORK, ERROR MINIMIZATION,   │      │ NETWORK, ERROR MINIMIZATION,   │
         │  │ AND THE LIKE, BASED ON         │      │ AND THE LIKE, BASED ON         │
         │  │ SENSITIVITY CALCULATION        │      │ SENSITIVITY CALCULATION        │
         │  │ PARAMETER                      │      │ PARAMETER                      │
         │  └──────────────────────────────┘      └──────────────────────────────┘
         │              │  S107B                              │  S112B
         │              ▼                          ◄─────< WITHIN EFFECTIVE RANGE? >
         │  ┌──────────────────────────────┐  YES         │
         │  │ COMBINE SYSTEM MODEL           │             │ NO
         │  │ SENSITIVITY AND DYNAMIC        │             │
         │  │ SYSTEM SENSITIVITY             │             │
         │  └──────────────────────────────┘             │
         │          │  S108B           │  S113B          │  S114B
         │          ▼                  ▼                  ▼
         │  ╱ OUTPUT COMBINED    ╱ ╱ OUTPUT DYNAMIC ╱ ╱ OUTPUT SYSTEM MODEL ╱
         │  ╱ SYSTEM SENSITIVITY ╱ ╱ SENSITIVITY    ╱ ╱ SENSITIVITY         ╱
         └──────┘  │                  │                  │
                   ▼                  ▼                  ▼
                              ( RETURN )
```

*FIG. 16*

EP 3 771 061 B1

# FIG. 17

SYSTEM STABILIZATION SYSTEM — 1D

MEASUREMENT UNIT INSTALLATION LOCATION DETERMINATION UNIT — 5

**REFERENCES CITED IN THE DESCRIPTION**

**Patent documents cited in the description**

- JP 2010063320 A
- JP 2019017194 A
- JP 2006101619 A
- WO 2017182918 A1

**Non-patent literature cited in the description**

- **YU CHRISTINE CHEN ; JIANHUI WANG ; ALEJANDRO D ; DOMINGUEZ-GARCIA ; PETER W. SAUER.** Measurement-Based Estimation of the Power Flow Jacobian Matrix. *IEEE Transactionson Smart Grid,* September 2016, vol. 7 (5), 2507-2515